# EUROPEAN PATENT APPLICATION

(11) **EP 4 776 642 A1**
(43) Date of publication of application: **15.07.2026**
(21) Application number: 24862555.0
(22) Date of filing: 19.08.2024
(51) Int. Cl.: H04N 23/60, H04N 5/265, H04N 23/663

(54) **IMAGE PROCESSING METHOD, IMAGE PROCESSING DEVICE, AND IMAGE PROCESSING SYSTEM**

(30) Priority: 05.09.2023 JP 2023143850
(71) Applicant: Sony Group Corporation, Tokyo 108-0075 (JP)
(72) Inventor: IMAEDA, Kota, Tokyo 108-0075 (JP); TAHARA, Daisuke, Tokyo 108-0075 (JP); INOUE, Fukutaro, Tokyo 108-0075 (JP)
(74) Representative: MFG Patentanwälte Meyer-Wildhagen Meggle-Freund Gerhard PartG mbB
(86) International application number: PCT/JP2024/029260
(87) International publication number: WO 2025/052901

(57) **Abstract**

An image processing method according to the present technology includes controlling display of a virtual object to be synthesized with a captured image captured by an image pickup device, on the basis of a control condition.

## Description

### Technical Field

The present technology relates to an image processing method, an image processing device, and an image processing system, more particularly, to a technology for superimposing a CG image on a captured image.

### Background Art

For example, as disclosed in Patent Literature 1, there has been proposed a system in which a captured image captured by a camera is synthesized in real time with a CG image generated by 3DCG (Three Dimensional Computer Graphic) processing, and the synthesized synthesis image (so-called AR image) is displayed on a camera monitor.

Since the synthesis image can be displayed on the camera monitor in real time in this system, a cameraman can check the synthesis image in real time and also operate the camera while viewing the synthesis image.

### Citation List

### Patent Literature

Patent Literature 1: Japanese Patent Application Laid-open No. 2011-35638

### Disclosure of Invention

### Technical Problem

In recent years, with the advancement of a CG processing technology, it has become difficult to distinguish a real object depicted in a captured image from a virtual object depicted in a CG image. Therefore, in the technology described in Patent Literature 1, there has been a fear that a real object and a virtual object cannot be distinguished from each other, to thus confuse the cameraman (user).

The present technology has been made in view of the circumstances as described above, and aims at improving convenience of synthesis images for the user when capturing images.

### Solution to Problem

An image processing method according to the present technology includes: controlling display of a virtual object to be synthesized with a captured image captured by an image pickup device, on the basis of a control condition.

According to the image processing method described above, it becomes possible to control the display of the virtual object or change a display mode of the virtual object, for example, according to whether or not a predetermined control condition is met.

### Brief Description of Drawings

[Fig. 1] A diagram showing a general outline of an image processing system according to an embodiment.
[Figs. 2] Diagrams respectively illustrating a captured image, a CG image, and a synthesis image.
[Fig. 3] A diagram showing a configuration of an image pickup device.
[Fig. 4] A block diagram showing a configuration example of an image processing device.
[Fig. 5] A diagram showing a functional configuration of the image processing device.
[Fig. 6] A diagram illustrating modes.
[Figs. 7] Diagrams each showing a display mode of a virtual object.
[Figs. 8] Diagrams each showing a display mode of the virtual object.
[Figs. 9] Diagrams showing display and non-display of the virtual object in a manual mode.
[Figs. 10] Diagrams showing control of the display mode of the virtual object in the manual mode.
[Figs. 11] Diagrams showing changes in transparency of the virtual object in the manual mode.
[Fig. 12] A diagram showing an example of a control condition in a camera position and posture mode.
[Fig. 13] A diagram showing another example of the control condition in the camera position and posture mode.
[Figs. 14] Diagrams showing changes in the transparency of the virtual object in a case where a change of a position or posture of the image pickup device is set as the control condition in the camera position and posture mode.
[Figs. 15] Diagrams showing display control of the virtual object in a case where a distance between the image pickup device and the virtual object falling within a predetermined threshold value is set as the control condition.
[Figs. 16] Diagrams showing changes in the transparency of the virtual object in the case where the distance between the image pickup device and the virtual object falling within the predetermined threshold value is set as the control condition.
[Fig. 17] A diagram illustrating a depth of field.
[Figs. 18] Diagrams illustrating control of display and non-display of the virtual object in an image pickup control mode.
[Figs. 19] Diagrams showing changes in the transparency of the virtual object in a case where a range other than the depth of field is determined as a display control range in the image pickup control mode.
[Fig. 20] A diagram showing an example of the control condition in a virtual object mode.
[Figs. 21] Diagrams showing display control of the virtual object in a case where the virtual object entering a control switch area is set as the control condition.
[Figs. 22] Diagrams showing changes in the transparency of the virtual object in the case where the virtual object entering the control switch area is set as the control condition.
[Figs. 23] Diagrams showing changes in the transparency of the virtual object in a case where the virtual object entering an angle of view of the image pickup device is set as the control condition.
[Figs. 24] Diagrams illustrating display control of the virtual object in a real object mode.
[Figs. 25] Diagrams illustrating changes in the transparency of the virtual object in the real object mode.
[Fig. 26] A diagram showing an example of icons indicating the modes.
[Fig. 27] A diagram showing an example of icons indicating the display modes.
[Fig. 28] A diagram showing an example of icons indicating an elapse of time in the change in transparency.
[Figs. 29] Diagrams showing icons during special processing.
[Fig. 30] A diagram showing an example of a monitor synthesis image on which an icon is displayed.
[Fig. 31] A flowchart showing a processing flow of display control of a virtual object 6.
[Fig. 32] A flowchart showing a processing flow of display control for each set mode.
[Fig. 33] A diagram showing a modified example of the configuration of the image processing system.
[Fig. 34] A diagram showing a modified example of the configuration of the image processing system.
[Fig. 35] A diagram showing a modified example of the configuration of the image processing system.

### Modes for Carrying Out the Invention

Hereinafter, an embodiment of a sensor device according to the present technology will be described in the following order with reference to the attached drawings.
<1. General outline of image processing system>
<2. Explanation of modes>
<3. Icons displayed in monitor synthesis image>
<4. Processing flow of display control of virtual object>
<5. Modified examples>
<6. Summary of embodiment>
<7. Present technology>

It is noted that in the present technology, "image pickup" refers to not only image pickup that involves recording of image data, but also image pickup for displaying an image on a display unit without the recording of image data, such as a so-called through image or live view image.

"Image" refers to a moving image. Furthermore, "image" refers to not only a state where the image is displayed on a display unit, but also image data that is not displayed on a display unit, and this image data may also be referred to as "image".

"Real object" refers to not only a target (subject) captured by an image pickup device, but also includes a subject image in an image.

"Virtual object" refers to not only a virtual object generated by 3DCG processing, but also includes a virtual object that appears in a CG image generated by rendering.

### <1. General outline of image processing system>

### [1.1. Overall configuration of image processing system]

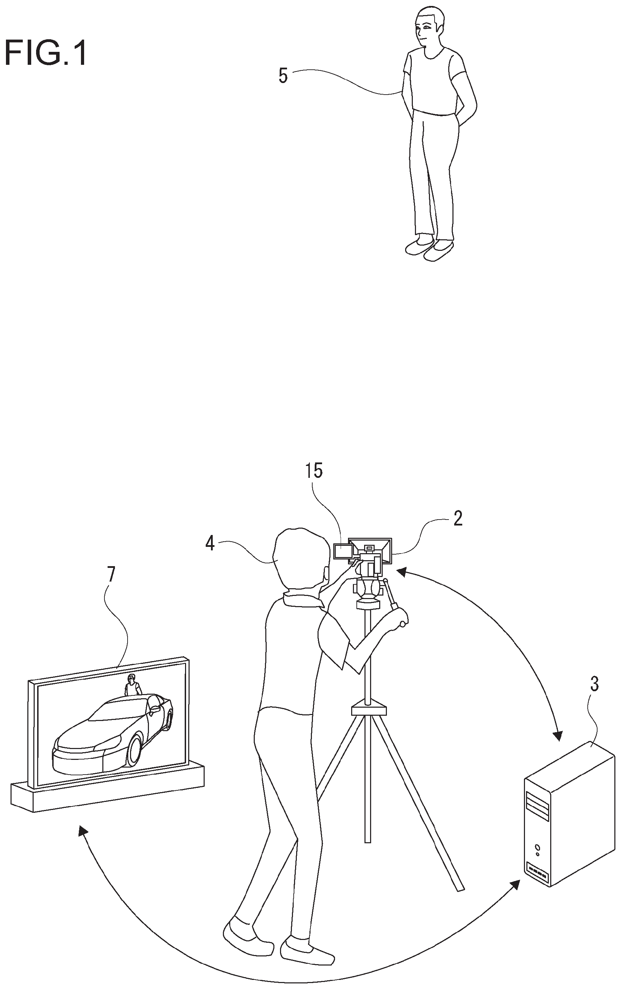

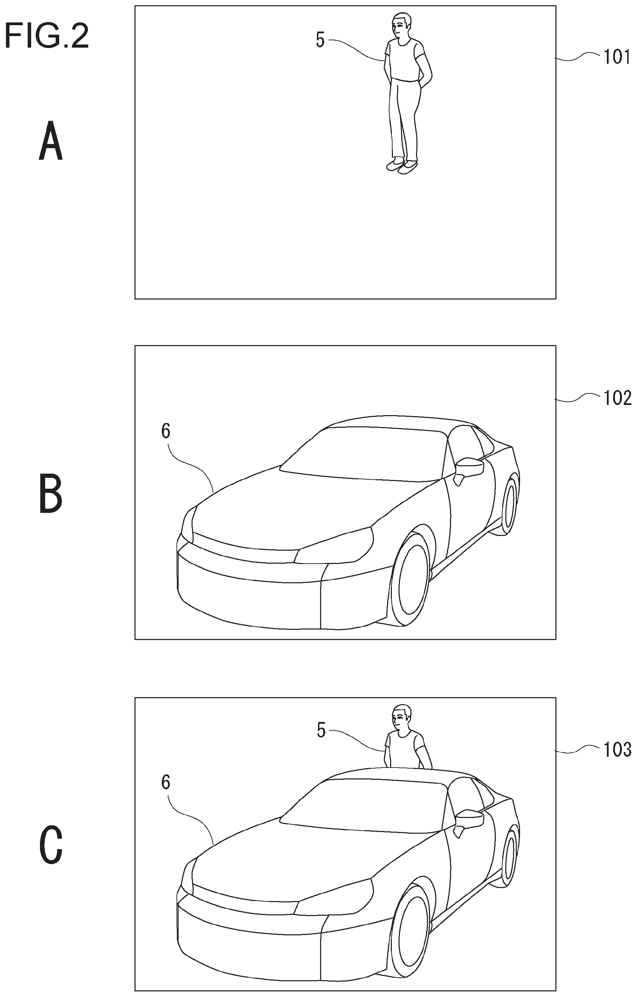

Fig. 1 is a diagram showing a general outline of an image processing system 1 according to an embodiment. Figs. 2 are diagrams respectively illustrating a captured image, a CG image, and a synthesis image.

As shown in Fig. 1, the image processing system 1 according to the embodiment includes an image pickup device 2 and an image processing device 3.

The image pickup device 2 captures an image of a real object 5 (herein, a person) as a subject in accordance with an operation by a cameraman 4, to thus generate a captured image (moving image) 101 as shown in Fig. 2A.

The image processing device 3 is constituted of, for example, a workstation. The image processing device 3 may be arranged at an image pickup site or at a location different from the image pickup site. The image processing device 3 is connected to the image pickup device 2 in a wired or wireless manner, and receives the captured image 101 from the image pickup device 2 and/or transmits a synthesis image 103 to the image pickup device 2.

The image processing device 3 generates a CG image 102 including a virtual object 6 (herein, a car) as shown in Fig. 2B.

The image processing device 3 then synthesizes the CG image 102 (virtual object 6) with the captured image 101 to generate the synthesis image 103 as shown in Fig. 2C. It is noted that the synthesis image 103 may also include a frame in which the CG image 102 is not synthesized. After that, the image processing device 3 transmits the generated synthesis image 103 to, for example, one or both of the image pickup device 2 and a monitor 7.

Upon receiving the synthesis image 103 from the image processing device 3, the image pickup device 2 displays the received synthesis image 103 on a display unit 15.

Upon receiving the synthesis image 103 from the image processing device 3, the monitor 7 displays the received synthesis image 103.

As a result, in the image processing system 1, it becomes possible for the cameraman 4 to check the synthesis image 103 as a moving image, that is, an image in which the virtual object 6 is superimposed on the captured image 101, substantially in real time during image pickup by the image pickup device 2.

### [1.2. Overall configuration of image pickup device]

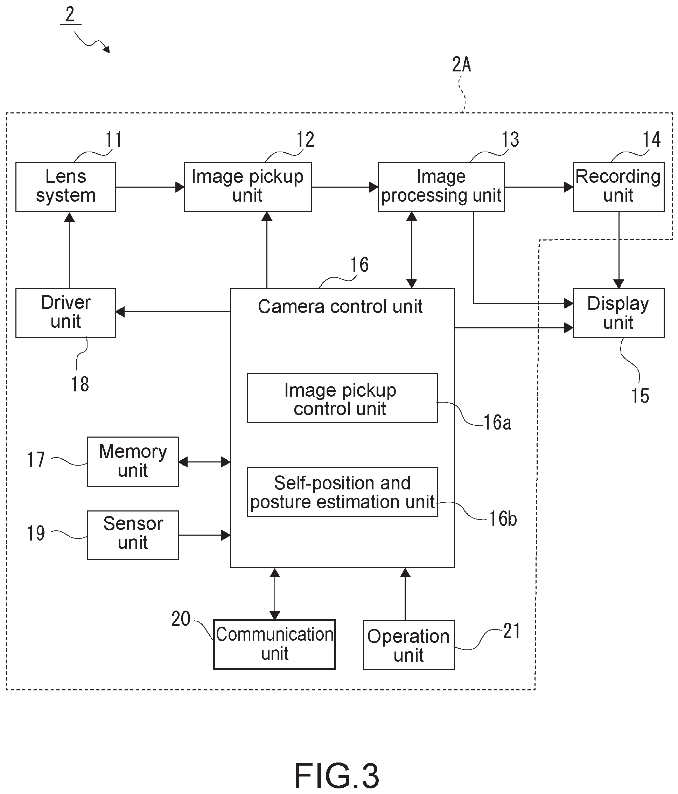

Fig. 3 is a diagram showing a configuration of the image pickup device 2. As shown in Fig. 3, the image pickup device 2 includes a lens system 11, an image pickup unit 12, an image processing unit 13, a recording unit 14, a display unit 15, a camera control unit 16, a memory unit 17, a driver unit 18, a sensor unit 19, a communication unit 20, and an operation unit 21. It is noted that hereinafter, the respective units of the image pickup device 2 excluding the display unit 15 will be collectively referred to as a main body unit 2A.

The lens system 11 includes lenses such as a zoom lens and a focus lens, a diaphragm mechanism, and the like. The lens system 11 also includes a motor for operating these lenses and diaphragm mechanism. By this lens system 11, light (incident light) from the real object 5 is collected at the image pickup unit 12.

It is noted that the lens system 11 may be provided integrally with the image pickup device 2, or may be configured as an interchangeable lens separate from the image pickup device 2.

The image pickup unit 12 is configured to include an image sensor (image pickup element) of a CMOS (Complementary Metal Oxide Semiconductor) type, a CCD (Charge Coupled Device) type, or the like.

The image pickup unit 12 executes, for example, CDS (Correlated Double Sampling) processing, AGC (Automatic Gain Control) processing, and/or the like on electric signals obtained by photoelectrically converting light received by the image sensor, and further performs A/D (Analog/Digital) conversion processing. The image pickup unit 12 then outputs a captured image signal as digital data to the image processing unit 13.

The image processing unit 13 is configured as an image processing processor by a DSP (Digital Signal Processor) and/or the like, for example. The image processing unit 13 performs various types of signal processing on the captured image signal from the image pickup unit 12. The image processing unit 13 performs, for example, preprocessing, synchronization processing, YC generation processing, resolution conversion processing, file formation processing, and the like.

The preprocessing involves performing, with respect to the captured image signals from the image pickup unit 12, clamp processing for clamping a black level of R, G, and B to a predetermined level, correction processing among the R, G, and B color channels, and the like.

The synchronization processing involves performing color separation processing so that image data for each pixel contains all color components of R, G, and B. For example, in the case of an image pickup element that uses a Bayer array color filter, demosaic processing is performed as the color separation processing.

The YC generation processing involves generating (separating) a luminance (Y) signal and a color (C) signal from the R, G, and B image data.

The resolution conversion processing involves executing resolution conversion processing on image data that has been subjected to the various types of signal processing.

In the file formation processing, for example, compression encoding for recording and/or communication, formatting, generation and/or addition of metadata, and/or the like are performed with respect to the image data that has been subjected to the various types of processing described above, to generate a file for recording and/or communication.

For example, generation of an image file as an MP4 format or the like, that is used for recording of a moving image/audio conforming to MPEG-4, is performed.

It is noted that it is also possible to generate an image file as raw image data.

The recording unit 14 is a memory card (portable flash memory or the like) that is a recording medium that can be attached to or detached from the image pickup device 2, a flash memory and/or HDD (hard disk drive) that is built into the image pickup device 2, and/or the like. The recording unit 14 records the image data output from the image processing unit 13.

The display unit 15 executes various displays on a display screen based on instructions from the camera control unit 16.

For example, the display unit 15 displays a reproduction image of image data read out from the recording unit 14.

The display unit 15 also displays the synthesis image 103 transmitted from the image processing device 3 in response to an instruction from the camera control unit 16. As a result, the synthesis image 103 indicating a state where a composition is being confirmed, a state where a moving image is being recorded, or the like is displayed on the display unit 15 as a so-called through image.

The display unit 15 may also execute display of various operation menus, icons, messages, and the like, that is, display as GUIs (Graphical User Interfaces), based on instructions from the camera control unit 16.

The camera control unit 16 is constituted of a microcomputer (arithmetic processing device) including a CPU (Central Processing Unit).

The memory unit 17 stores information and the like used by the camera control unit 16 for processing. The memory unit 17 comprehensively refers to, for example, a ROM (Read Only Memory), a RAM (Random Access Memory), a flash memory, and the like.

The memory unit 17 may be a memory area built into a microcomputer chip that serves as the camera control unit 16, or may be constituted of a separate memory chip.

The camera control unit 16 controls the entire image pickup device 2 by executing programs stored in the ROM, the flash memory, and/or the like of the memory unit 17. The camera control unit 16 includes functional units as an image pickup control unit 16a and a self-position and posture estimation unit 16b.

The image pickup control unit 16a controls necessary operations of the respective units related to image pickup, such as control of a shutter speed of the image pickup unit 12, instructions of various types of signal processing in the image processing unit 13, an image pickup operation and/or recording operation according to an operation by the cameraman 4, reproduction of recorded image data, and a control operation of the lens system 11 such as zoom, focus, and aperture adjustment.

The image pickup control unit 16a also calculates an angle of view, aperture value, lens distortion, and focal length of the image pickup device 2 as lens information, based on specifications of each lens and the diaphragm mechanism constituting the lens system 11, and operation information on a movement of the focus lens and/or zoom lens, opening and closing of the diaphragm mechanism, and/or the like. It is noted that a well-known method can be used as the calculation method for these pieces of lens information, so descriptions thereof will be omitted.

The self-position and posture estimation unit 16b estimates a position and posture of the image pickup device 2 based on detection information (in this example, triaxial acceleration information and angular velocity information) of the sensor unit 19 and the captured image obtained by the image pickup unit 12.

As the position and posture estimation method, for example, methods such as SLAM (Simultaneous Localization and Mapping) and VIO (Visual Inertial Odometry) can be used. For example, it is assumed that, in VIO, the position and posture are estimated by a technology of INS (Inertial Navigation System) or the like using an output of an IMU (sensor unit 19), which has a higher output rate than the image sensor (image pickup unit 12).

It is noted that a method such as VO (Visual Odometry) that does not use the detection information of the IMU may also be used.

The RAM in the memory unit 17 is used as a working area for the various types of data processing to be executed by the CPU of the camera control unit 16, for temporarily storing data, programs, and the like.

The ROM and/or flash memory (non-volatile memory) in the memory unit 17 are used to store an OS (Operating System) for the CPU to control the respective units, application programs for performing various operations, firmware, various types of setting information, and the like.

The various types of setting information include: an exposure setting, a shutter speed setting, and a mode setting as setting information related to image pickup operations; a white balance setting, a color setting, and a setting related to image effects as setting information related to image processing; and a custom key setting, a display setting, and the like as setting information related to operability.

The driver unit 18 is provided with, for example, a motor driver with respect to a zoom lens drive motor, a motor driver with respect to a focus lens drive motor, a motor driver with respect to a diaphragm mechanism motor, and/or the like.

These motor drivers apply drive currents to the corresponding drivers in response to instructions from the camera control unit 16, to execute the movement of the focus lens and/or zoom lens, opening and closing of aperture blades of the diaphragm mechanism, and the like.

The sensor unit 19 comprehensively refers to the various sensors mounted on the image pickup device 2.

An example of the sensor unit 19 is an IMU (Inertial Measurement Unit). The IMU includes a triaxial acceleration sensor and angular velocity sensor, and outputs triaxial acceleration information and angular velocity information.

The communication unit 20 is capable of performing wired or wireless inter-equipment communication and/or network communication, which is communication with an external device via a predetermined communication network such as the Internet. The communication unit 20 transmits the captured image 101 to the image processing device 3, and also receives the synthesis image 103, for example.

The operation unit 21 collectively refers to input devices used by the user (cameraman 4) to perform various operation inputs. Specifically, the operation unit 21 is various operators (key, dial, touch panel), a touch panel, and/or the like.

When the operation unit 21 detects a user operation, a signal corresponding to the input operation is transmitted to the camera control unit 16.

### [1.3. Configuration of image processing device]

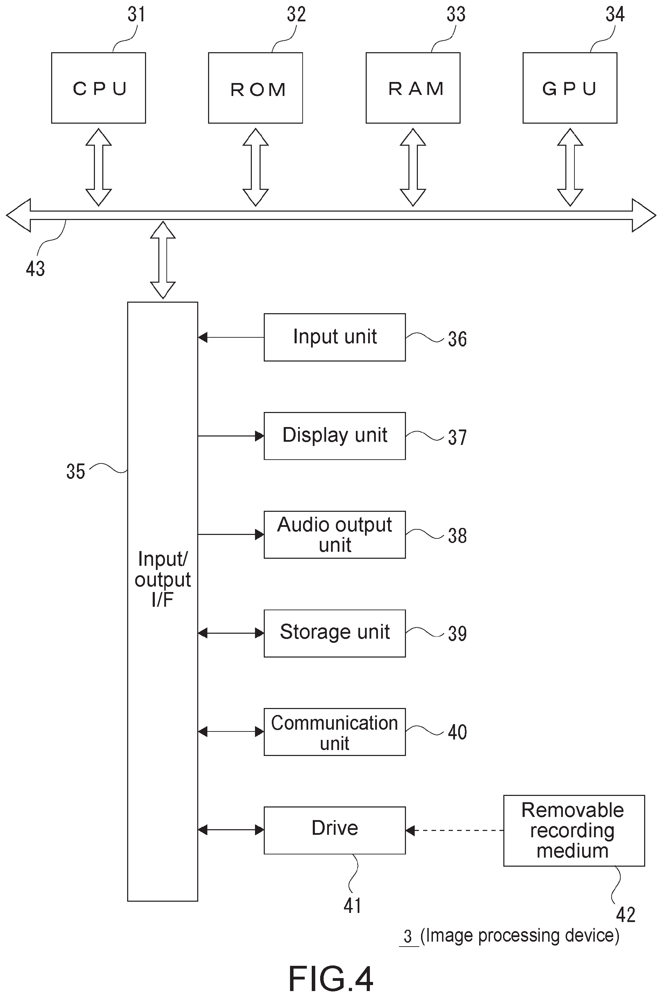

Fig. 4 is a block diagram showing a configuration example of the image processing device 3.

As shown in Fig. 4, the image processing device 3 includes a CPU 31. The CPU 31 executes various types of processing in accordance with programs stored in a ROM 32 or programs loaded from a storage unit 39 to a RAM 33. The RAM 33 also stores data necessary for the CPU 31 to execute various types of processing as appropriate.

The CPU 31, the ROM 32, and the RAM 33 are mutually connected via a bus 43.

Also connected to the bus 43 is a GPU (Graphics Processing Unit) 34.

The GPU 34 mainly performs 3DCG processing in real time in accordance with a rendering command from the CPU 31.

Also connected to the bus 43 is an input/output interface (I/F) 35.

An input unit 36 constituted of an operator and/or operation device is connected to the input/output interface 35. Examples of the input unit 36 include various operators and operation devices such as a keyboard, a mouse, a key, a dial, a touch panel, a touch pad, and a remote controller.

The input unit 36 detects operations, and signals corresponding to the detected operations are interpreted by the CPU 31.

Also connected to the input/output interface 35 either integrally or separately are a display unit 37 constituted of an LCD (Liquid Crystal Display) panel, an organic EL (Electro-Luminescence) panel, or the like, and an audio output unit 38 constituted of a speaker and/or the like.

The display unit 37 is used to display various types of information and is constituted of, for example, a display device provided in a housing of the image processing device 3, a separate display device connected to the image processing device 3, and/or the like. The display unit 37 may alternatively be the monitor 7.

The display unit 37 executes display of images for various types of image processing, moving images to be processed, and/or the like on the display screen based on instructions from the CPU 31. The display unit 37 also executes display of various operation menus, icons, messages, and the like, that is, display as GUIs (Graphical User Interfaces), based on the instructions from the CPU 31.

The storage unit 39 constituted of an SSD (Solid State Drive), an HDD (Hard Disk Drive), or the like and a communication unit 40 are connected to the input/output interface 35.

The communication unit 40 is capable of performing wired or wireless inter-equipment communication and/or network communication, which is communication with an external device via a predetermined communication network such as the Internet. Particularly in the present embodiment, the communication unit 40 is configured to be capable of performing data communication with the communication unit 20 of the image pickup device 2.

A drive 41 is connected to the input/output interface 35 as necessary, and a removable recording medium 42 such as a magnetic disk, an optical disc, a magneto-optical disc, or a semiconductor memory is loaded as appropriate.

By the drive 41, it is possible to read out data files of programs and/or the like that are used in the respective processing, and/or the like from the removable recording medium 42. The read data files are stored in the storage unit 39, and images and sounds included in the data files are output from the display unit 37 and the audio output unit 38. In addition, the computer programs and the like read out from the removable recording medium 42 are installed in the storage unit 39 as necessary.

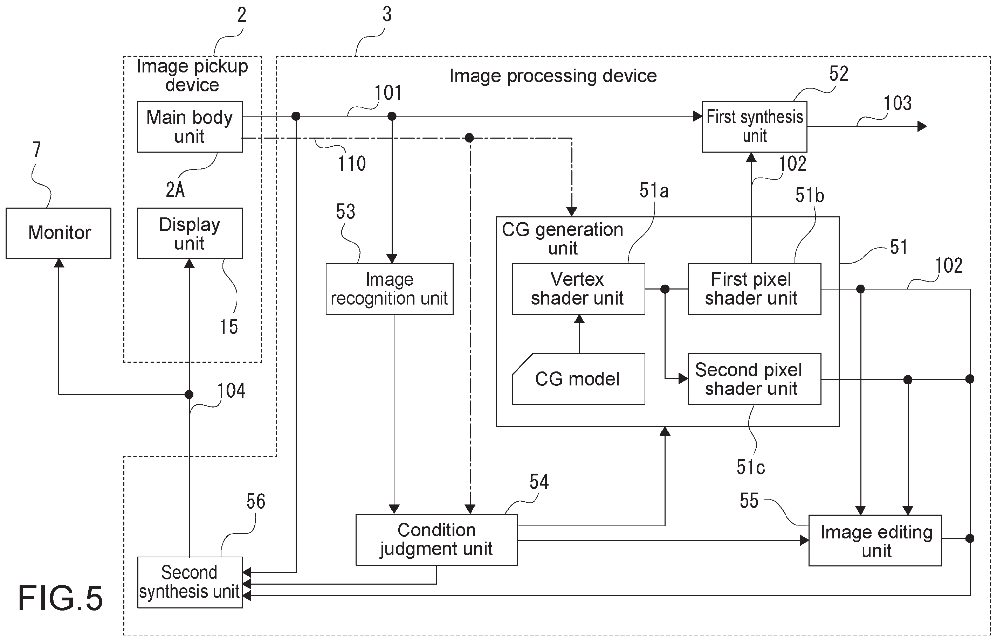

Fig. 5 is a diagram showing a functional configuration of the image processing device 3. It is noted that in Fig. 5, the configurations of the image pickup device 2 and the monitor 7 are also shown.

As shown in Fig. 5, the CPU 31 and GPU 34 of the image processing device 3 function as a CG generation unit 51, a first synthesis unit 52, an image recognition unit 53, a condition judgment unit 54, an image editing unit 55, and a second synthesis unit 56. It is noted that these functional units may be caused to function by only one of the CPU 31 or the GPU 34. Alternatively, one functional unit may be caused to function by both the CPU 31 and the GPU 34.

In the image processing system 1, the captured image 101 captured by the image pickup unit 12 of the image pickup device 2 (more precisely, the captured image 101 that has been subjected to image processing by the image processing unit 13) is transmitted to the image processing device 3 via the communication unit 20.

Furthermore, the image pickup device 2 transmits camera information 110 obtained during capturing of the captured image 101 to the image processing device 3 via the communication unit 20. The camera information 110 may be metadata assigned to the captured image 101, or may be information independent of the captured image 101.

The camera information 110 includes a position, posture, angle of view, aperture value, lens distortion, focal length, and/or the like of the image pickup device 2. These pieces of information are transmitted for each frame constituting the captured image 101, for example.

The position and posture of the image pickup device 2 are estimated for each frame by the self-position and posture estimation unit 16b.

The angle of view, aperture value, lens distortion, and focal length of the image pickup device 2 are calculated by the image pickup control unit 16a as the lens information, as described above.

Upon receiving the captured image 101 and the camera information 110, the image processing device 3 causes the captured image 101 to be input to the first synthesis unit 52, the image recognition unit 53, and the second synthesis unit 56, and causes the camera information 110 to be input to the CG generation unit 51 and the condition judgment unit 54.

The CG generation unit 51 is configured to include a vertex shader unit 51a, a first pixel shader unit 51b, and a second pixel shader unit 51c. However, the CG generation unit 51 is not limited to this and may take other configurations as long as it is capable of generating the CG image 102 from a 3D model.

Upon receiving the camera information 110, the vertex shader unit 51a sets an angle of view, aperture value, lens distortion, and focal length of a virtual camera that virtually captures an image in a virtual space expressed by a CG model, based on the angle of view, aperture value, lens distortion, and focal length included in the camera information 110. Here, the setting of the lens system of the virtual camera is made to match with the setting of the lens system 11 of the image pickup device 2.

Furthermore, the vertex shader unit 51a updates a position and posture of the virtual camera based on the position and posture of the image pickup device 2 included in the camera information 110. Here, in the CG model, a position (coordinate position) of the virtual object 6 is indicated by a coordinate system that uses a predetermined position in the virtual space as a reference. Further, a coordinate system of a real space captured by the image pickup device 2 and a coordinate system of the virtual space expressed by the CG model are adjusted to match. Therefore, by matching the position and posture of the virtual camera with the position and posture of the image pickup device 2, an image pickup range of the image pickup device 2 and an image pickup range of the virtual camera can be made to match.

Next, the vertex shader unit 51a performs shape conversion processing of the virtual object 6 when viewed from the updated position and posture of the virtual camera, and/or the like.

The first pixel shader unit 51b performs processing for determining a final color with respect to the pixels (shading). The processing for shading includes processing of texture mapping, lighting, and the like. In addition, various types of other processing is performed as processing in fragment units.

The first pixel shader unit 51b applies a pixel shader to generate the CG image 102 capturing the virtual object 6. The generated CG image 102 is output to the first synthesis unit 52.

The first synthesis unit 52 synthesizes the captured image 101 transmitted from the image pickup device 2 with the CG image 102 generated by the CG generation unit 51, to generate the synthesis image 103 in which the virtual object 6 is superimposed on the captured image 101.

It is noted that although the present embodiment is described using the example in which the virtual object 6 is present at a position that is more on a front side than the real object 5, the virtual object 6 may alternatively be present at a position more on a rear side than the real object 5.

In such a case, it is only necessary for the captured image 101 to include information related to a distance to the real object 5 for each pixel and the CG image 102 to include information related to a distance to the virtual object 6 for each pixel, so that the synthesis image 103 is generated while preferentially keeping the pixels on the front side at the time of synthesis.

In this manner, in the image processing system 1, the synthesis image 103 in which the virtual object 6 is superimposed on the captured image 101 is generated in real time. The synthesis image 103 generated herein is stored in the storage unit 39 as, for example, the synthesis image 103 to be kept eventually.

Incidentally, as described above, the cameraman 4 captures the real object 5 while checking an image pickup state by an image displayed on the display unit 15 or the monitor 7. Therefore, if only the captured image 101 in which the CG image 102 is not synthesized is displayed on the display unit 15 or the monitor 7, it is difficult to check where and how the CG image 102 is actually displayed, whether or not the focus of the image pickup device 2 is on the virtual object 6, and the like.

In this regard, in the image processing system 1, the synthesis image 103 in which the CG image 102 (virtual object 6) is synthesized with the captured image 101 is displayed as a through image on the display unit 15 and the monitor 7, thus making it easier for the cameraman 4 to grasp the situation during image pickup.

However, there is a fear that, in the synthesis image 103 generated as described above, that is, in the synthesis image 103 in which the virtual object 6 is superimposed as it is on the captured image 101, the virtual object 6 will be displayed in a large portion of the display unit 15 to rather make it difficult to grasp the surrounding situation.

There is also a fear that the real object 5 and the virtual object 6 cannot be distinguished from each other to confuse the cameraman 4 during image pickup.

In this regard, the image processing system 1 is configured to control display of the virtual object 6 based on predetermined control conditions. The control of display of the virtual object 6 includes control of whether or not to display the virtual object 6 and control of a display mode of the virtual object 6.

In descriptions below, the synthesis image 103 displayed on the display unit 15 and the monitor 7 will be described as a monitor synthesis image 104.

First, functional units for generating the monitor synthesis image 104 will be described. However, it goes without saying that the functional units described above also function as the functional units for generating the monitor synthesis image 104.

The second pixel shader unit 51c performs processing for determining a final color with respect to the pixels (shading). Unlike the first pixel shader unit 51b, the second pixel shader unit 51c performs translucence processing on the pixels. In the translucence processing, transparency of each pixel is changed to designated transparency.

It is noted that only one of the first pixel shader unit 51b or the second pixel shader unit 51c may be provided. In this case, it is only necessary for the one of the pixel shader units provided to perform both processing.

The CG image 102 generated by the first pixel shader unit 51b and the second pixel shader unit 51c is output to the image editing unit 55 and the second synthesis unit 56 as appropriate.

The image recognition unit 53 performs object recognition processing for recognizing a predetermined real object 5 from the captured image 101. As the types of real object 5 to be recognized, there are a person, a vehicle, and the like. It is noted that since a well-known method can be used for the object recognition processing, descriptions thereof will be omitted herein.

The condition judgment unit 54 judges whether or not a control condition, which will be described later in detail, has been met based on the camera information 110 received from the image pickup device 2 and the recognition result of the real object 5 by the image recognition unit 53. The condition judgment unit 54 outputs whether or not the control condition has been met to the CG generation unit 51, the image editing unit 55, and the second synthesis unit 56 as appropriate.

The image editing unit 55 performs two-dimensional editing processing of the virtual object 6 (CG image 102) based on whether or not the control condition has been met, more specifically, in accordance with a mode, a display mode, and/or the like to be described later in detail. It is noted that the editing processing will be described later in detail.

After performing the editing processing on the virtual object 6, the image editing unit 55 outputs the CG image 102, which shows the virtual object 6 that has been subjected to the editing processing, to the second synthesis unit 56.

The second synthesis unit 56 synthesizes the captured image 101 transmitted from the image pickup device 2 with the CG image 102 generated by the CG generation unit 51 or the CG image 102 subjected to the editing processing by the image editing unit 55, to generate the monitor synthesis image 104. The generated monitor synthesis image 104 is output to the image pickup device 2 and the monitor 7.

The synthesized monitor synthesis image 104 is then displayed on the display unit 15 of the image pickup device 2 and the monitor 7.

### <2. Explanation of modes>

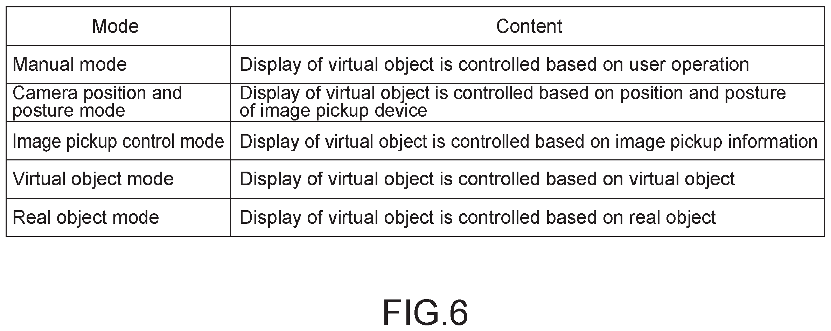

Fig. 6 is a diagram illustrating modes. As shown in Fig. 6, a manual mode, a camera position and posture mode, an image pickup control mode, a virtual object mode, and a real object mode are provided as modes for controlling display of the virtual object 6 in the image processing system 1.

It is noted that the image processing system 1 only needs to be provided with one or more of these modes.

The manual mode is a mode in which the display of the virtual object 6 is controlled in accordance with, for example, an operation performed by the cameraman 4 (user) with respect to the operation unit 21. Although descriptions will be given herein using the operation performed by the cameraman 4, operations performed by people other than the cameraman 4 may also be used.

The camera position and posture mode is a mode in which a control condition that is based on a position and posture of the image pickup device 2 is set.

The image pickup control mode is a mode in which a control condition that is based on image pickup information (angle of view, aperture, lens distortion, focal length) of the image pickup device 2 is set.

The virtual object mode is a mode in which a control condition that is based on the virtual object 6 is set.

The real object mode is a mode in which a control condition that is based on the real object 5 is set.

In the image processing system 1, one or a plurality of these five modes are set, and the display of the virtual object 6 is controlled in accordance with the set mode. In each of the modes, as control of the display of the virtual object 6, control of whether or not to display (whether or not to perform display of) the virtual object 6, control of a display mode of the virtual object 6, and a change of transparency of the virtual object 6 can be performed. The display control performed out of these may be determined in advance, may be switched by an operation to the operation unit 21, or may be determined by an attribute added to the virtual object 6.

### [2.1. Display modes of virtual object 6]

Here, as the display modes of the virtual object 6, a normal display mode, a contour enhancement display mode, a semi-transparent display mode, a mesh display mode, and a contour display mode are provided. Here, the display modes of the virtual object 6 will be described first, and then the details of each mode will be described.

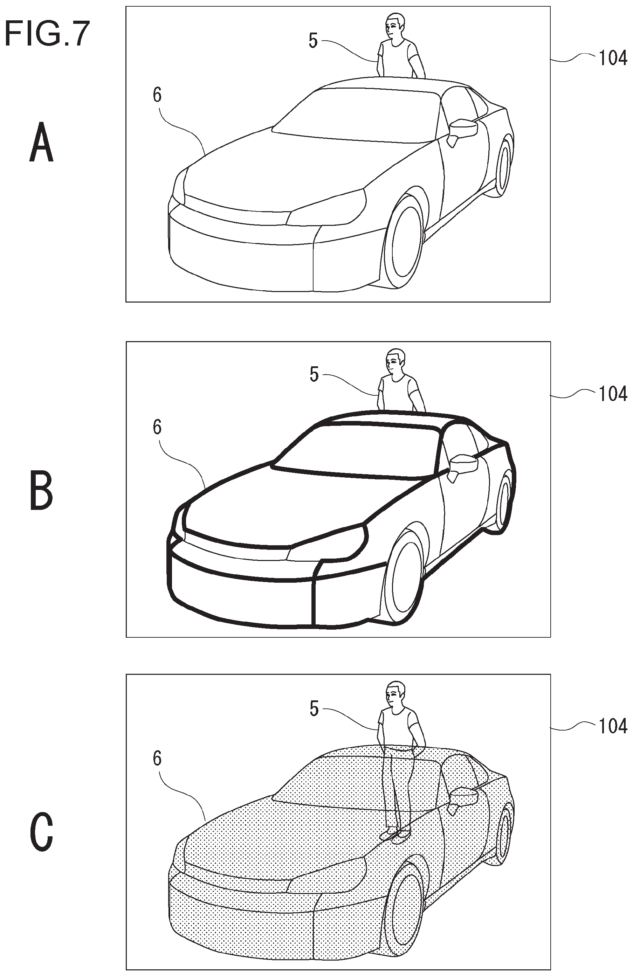

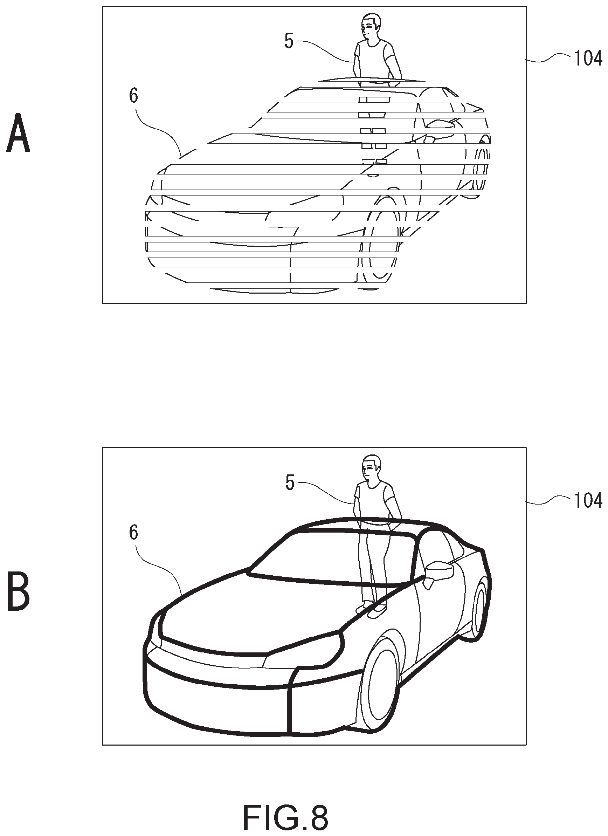

Figs. 7 and 8 are diagrams showing the display modes of the virtual object 6. It is noted that for convenience of explanation, the real object 5 is shown together with the virtual object 6 in Figs. 7 and 8.

As shown in Fig. 7A, the normal display mode is a display mode in which the virtual object 6 to be output to the first synthesis unit 52, that is, the virtual object 6 that is to be eventually superimposed on the captured image 101, is displayed as it is.

Therefore, when the virtual object 6 is arranged in front of the real object 5 (image pickup device 2 side), a portion of the real object 5 that overlaps with the virtual object 6 cannot be seen in the monitor synthesis image 104.

In this normal display mode, it becomes possible for the cameraman 4 to check the monitor synthesis image 104, which is the same as the synthesis image 103 to be created eventually.

As shown in Fig. 7B, the contour enhancement display mode is a display mode in which a contour of virtual object 6 is enhanced.

In the contour enhancement display mode, the image editing unit 55 extracts a contour of the virtual object 6 and performs editing processing for displaying the extracted contour in a thick line or in a different color, for example.

Therefore, when the virtual object 6 is arranged in front of the real object 5 (image pickup device 2 side), a portion of the real object 5 that overlaps with the virtual object 6 cannot be seen in the monitor synthesis image 104, similar to the normal display mode.

In this contour enhancement display mode, the contour of the virtual object 6 is enhanced, so it becomes possible for the cameraman 4 to easily identify the virtual object 6. It also becomes possible easily distinguish the virtual object 6 and the real object 5 from each other.

As shown in Fig. 7C, the semi-transparent display mode is a display mode in which a semi-transparent virtual object 6 generated by the first pixel shader unit 51b is displayed.

Therefore, even when the virtual object 6 is arranged in front of the real object 5 (image pickup device 2 side), a portion of the real object 5 that overlaps with the virtual object 6 is can be seen through the virtual object 6 in the monitor synthesis image 104.

In this semi-transparent display mode, the virtual object 6 is displayed semi-transparently, so it becomes possible for the cameraman 4 to easily identify the virtual object 6. It also becomes possible to check the real object 5 behind the virtual object 6.

As shown in Fig. 8A, the mesh display mode is a display mode in which the virtual object 6 is displayed in a mesh pattern. In the meshing of the virtual object 6, a 3D virtual object 6 may be meshed, or a 2D virtual object 6 may be meshed. In the meshing of a 2D virtual object 6, horizontal stripes may be used as shown in Fig. 8A, or vertical or diagonal stripes may be used.

In the horizontal stripe mesh display mode, the image editing unit 55 divides the 2D virtual object 6 in an up-down direction at predetermined widths, and performs editing processing to decimate every other divided portions.

In this mesh display mode, the virtual object 6 can be roughly recognized, and a rear side can alternately be seen in the up-down direction, so it becomes possible to check the real object 5 behind the virtual object 6. It also becomes possible to reduce a processing load since the 2D virtual object 6 is edited in the horizontal stripe mesh display mode.

As shown in Fig. 8B, the contour display mode is a display mode in which only the contour of the virtual object 6 is displayed.

In the contour display mode, the image editing unit 55 performs editing processing for extracting only the contour of the virtual object 6.

Therefore, even when the virtual object 6 is arranged in front of the real object 5, a portion of the real object 5 that overlaps with the virtual object 6 can be completely seen through the virtual object 6 in the monitor synthesis image 104.

In this contour display mode, only the contour of the virtual object 6 is displayed, so it becomes possible for the cameraman 4 to easily identify the position and/or shape of the virtual object 6. It also becomes possible to easily distinguish the virtual object 6 and the real object 5 from each other. In addition, the rear side of the virtual object 6 can be easily checked.

It is noted that although these five display modes are provided in the image processing system 1, one or more of these display modes only need to be provided.

### [2.2. Manual mode]

In the manual mode, an entire range is determined as a display control range of the virtual object 6. The display control range refers to a range on the captured image 101 where display control of the virtual object 6 is to be performed. When the entire range is determined as the display control range, display control of the virtual object 6 superimposed on the captured image 101 is changed all together across the entire range.

It is noted that a control switch range is determined automatically by the CPU 31 at the time of the mode setting.

The control condition includes operating a predetermined operation unit 21 and/or being set in advance in the menu of the image pickup device 2.

For example, when operating a predetermined operation unit 21 is set as the control condition, the camera control unit 16 of the image pickup device 2 transmits information on the operation of the predetermined operation unit 21 to the image processing device 3. In the image processing device 3, the information on the operation of the predetermined operation unit 21 is input to the condition judgment unit 54, and the condition judgment unit 54 judges whether or not the control condition is met based on the input information.

### [2.2.1. Control of display and non-display of virtual object 6 in manual mode]

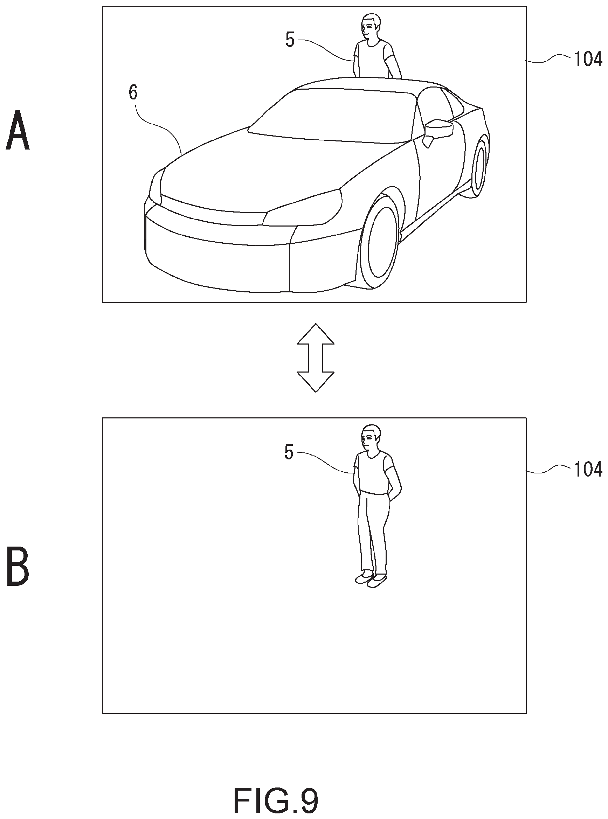

Figs. 9 are diagrams respectively showing display and non-display of the virtual object 6 in the manual mode. First, a case of controlling display and non-display of the virtual object 6 in the manual mode will be described.

As shown in Fig. 9A, it is assumed that the monitor synthesis image 104 in which the virtual object 6 in the normal display mode is synthesized is displayed on the display unit 15 and the monitor 7. It is noted that in descriptions below, unless stated otherwise, it is assumed that the monitor synthesis image 104 in which the virtual object 6 in the normal display mode is synthesized is displayed first.

When the predetermined operation unit 21 is operated in such a state, the condition judgment unit 54 judges that the control condition has been met. When the control condition is met, the condition judgment unit 54 notifies the second synthesis unit 56 that the control condition has been met. When notified that the control condition has been met, the second synthesis unit 56 does not superimpose the virtual object 6 on the captured image 101 as shown in Fig. 9B. In other words, the captured image 101 is output as it is to the image pickup device 2 and the monitor 7 as the monitor synthesis image 104. As a result, the monitor synthesis image 104 in which the virtual object 6 is not superimposed is displayed on the display unit 15 and the monitor 7.

Further, when the predetermined operation unit 21 is no longer operated in a state where the monitor synthesis image 104 in which the virtual object 6 is not superimposed is displayed on the display unit 15 and the monitor 7 as shown in Fig. 9B, the condition judgment unit 54 judges that the control condition is no longer met. When the control condition is no longer met, the condition judgment unit 54 notifies the second synthesis unit 56 that the control condition is no longer met. When notified that the control condition is no longer met, the second synthesis unit 56 superimposes the virtual object 6 on the captured image 101 to generate the monitor synthesis image 104 as shown in Fig. 9A, and outputs the monitor synthesis image 104 to the image pickup device 2 and the monitor 7. As a result, the monitor synthesis image 104 in which the virtual object 6 is superimposed is displayed on the display unit 15 and the monitor 7.

As a result, in the image processing system 1, it becomes possible to control the display and non-display of the virtual object 6 at a timing desired by the cameraman 4, and thus an image pickup task of the cameraman 4 is facilitated.

### [2.2.2. Control of display mode of virtual object 6 in manual mode]

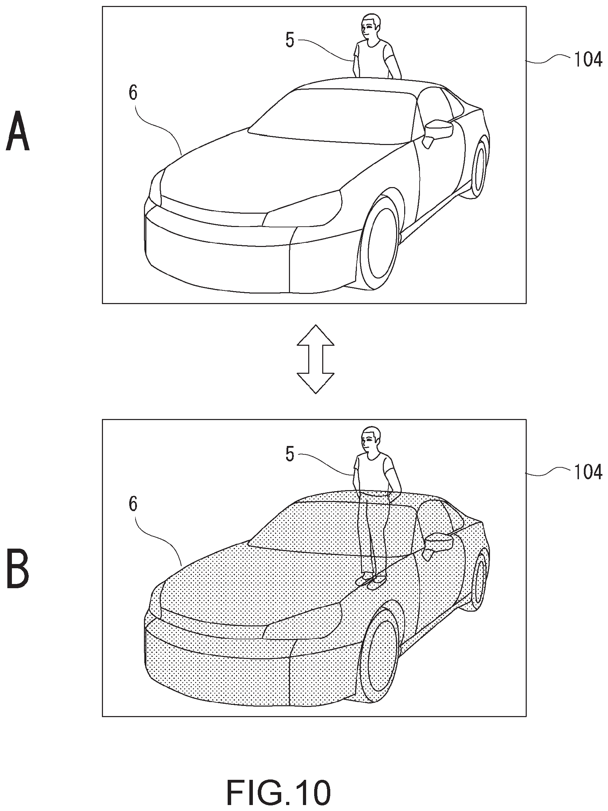

Figs. 10 are diagrams showing control of the display mode of the virtual object 6 in the manual mode. Next, a case of controlling the display mode of the virtual object 6 in the manual mode will be described.

As shown in Fig. 10A, it is assumed that the monitor synthesis image 104 in which the virtual object 6 in the normal display mode is synthesized is displayed on the display unit 15 and the monitor 7.

When the predetermined operation unit 21 is operated in such a state, the condition judgment unit 54 judges that the control condition has been met. When the control condition is met, the condition judgment unit 54 notifies the CG generation unit 51 or the image editing unit 55 that the control condition has been met. The CG generation unit 51 or the image editing unit 55 generates a CG image 102 in which the virtual object 6 is displayed in a post-change display mode that has been determined in advance, and outputs the CG image 102 to the second synthesis unit 56. It is noted that as the post-change display mode, any one of the contour enhancement display mode, the semi-transparent display mode, the mesh display mode, or the contour display mode is determined in advance by the cameraman 4, or is determined in advance by an attribute added to the virtual object 6, for example.

The second synthesis unit 56 superimposes the virtual object 6 in the post-change display mode (herein, the semi-transparent display mode) on the captured image 101 to generate the monitor synthesis image 104 as shown in Fig. 10B, and outputs the monitor synthesis image 104 to the image pickup device 2 and the monitor 7. As a result, the monitor synthesis image 104 in which the virtual object 6 in the post-change display mode is superimposed is displayed on the display unit 15 and the monitor 7.

It is noted that here, the CG image 102 only needs to be generated by one or both of the CG generation unit 51 and the image editing unit 55. The same holds true in descriptions below for a case where the CG image 102 is generated by the CG generation unit 51 or the image editing unit 55.

Further, when the predetermined operation unit 21 is no longer operated in a state where the monitor synthesis image 104 in which the virtual object 6 in the post-change display mode is superimposed as shown in Fig. 10B is displayed on the display unit 15 and the monitor 7, the condition judgment unit 54 judges that the control condition is no longer met. When the control condition is no longer met, the condition judgment unit 54 notifies the CG generation unit 51 or the image editing unit 55 that the control condition is no longer met. The CG generation unit 51 or the image editing unit 55 generates a CG image 102 in which the virtual object 6 is displayed in the display mode before the change (i.e., normal display mode), and outputs the CG image 102 to the second synthesis unit 56.

The second synthesis unit 56 superimposes the virtual object 6 in the normal display mode on the captured image 101 to generate the monitor synthesis image 104 as shown in Fig. 10A, and outputs the monitor synthesis image 104 to the image pickup device 2 and the monitor 7. As a result, the monitor synthesis image 104 in which the virtual object 6 in the display mode before the change is superimposed is displayed on the display unit 15 and the monitor 7.

As a result, in the image processing system 1, it becomes possible to control the display mode of the virtual object 6 at a timing desired by the cameraman 4, and thus an image pickup task of the cameraman 4 is facilitated, similar to the case of controlling the display and non-display of the virtual object 6.

### [2.2.3. Change of transparency of virtual object 6 in manual mode]

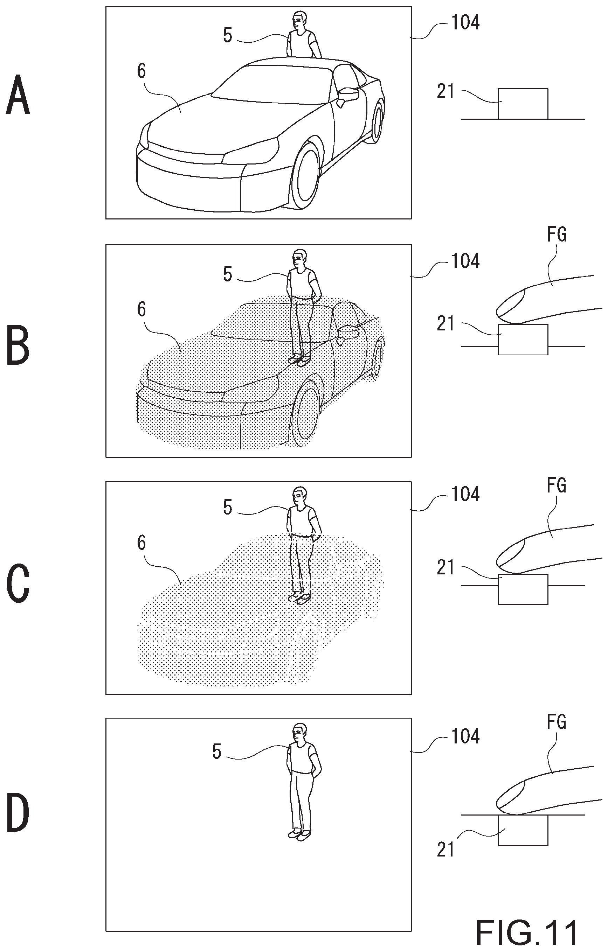

Figs. 11 are diagrams showing changes of the transparency of the virtual object 6 in the manual mode. Next, the changes of the transparency of the virtual object 6 in the manual mode will be described.

As shown in Fig. 10A, it is assumed that the monitor synthesis image 104 in which the virtual object 6 in the normal display mode is synthesized is displayed on the display unit 15 and the monitor 7.

When the predetermined operation unit 21 is operated in such a state, in the image processing device 3, information indicating an amount of operation of the operation unit 21 is input from the image pickup device 2, and the condition judgment unit 54 judges that the control condition has been met.

When the control condition is met, the condition judgment unit 54 notifies the CG generation unit 51 or the image editing unit 55 that the control condition has been met. The CG generation unit 51 or the image editing unit 55 generates a CG image 102 such that the virtual object 6 is displayed in transparency corresponding to the amount of operation of the operation unit 21, and outputs the CG image 102 to the second synthesis unit 56. The second synthesis unit 56 generates a monitor synthesis image 104 in which the virtual object 6 whose transparency corresponds to the amount of operation of the operation unit 21 is superimposed on the captured image 101.

As a result, the monitor synthesis image 104 in which the transparency of the virtual object 6 increases as the amount of operation of the operation unit 21 increases as shown in order from Fig. 10A to Fig. 10D, for example, is generated.

As described above, in the image processing system 1, it becomes possible for the cameraman 4 to check the virtual object 6 with desired transparency by adjusting the amount of operation of the operation unit 21. Furthermore, by making the transparency of the virtual object 6 variable, it becomes possible to adjust the way the rear side of the virtual object 6 is seen.

### [2.3. Camera position and posture mode]

In the camera position and posture mode, an entire range or a partial range is determined as the display control range of the virtual object 6. In the camera position and posture mode, the display control range is determined according to the control condition to be set.

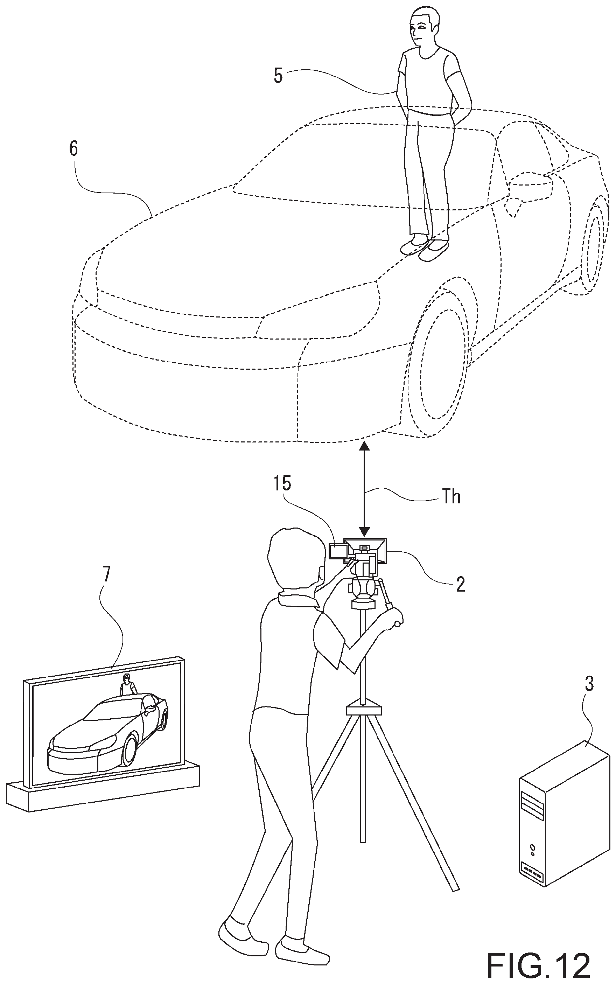

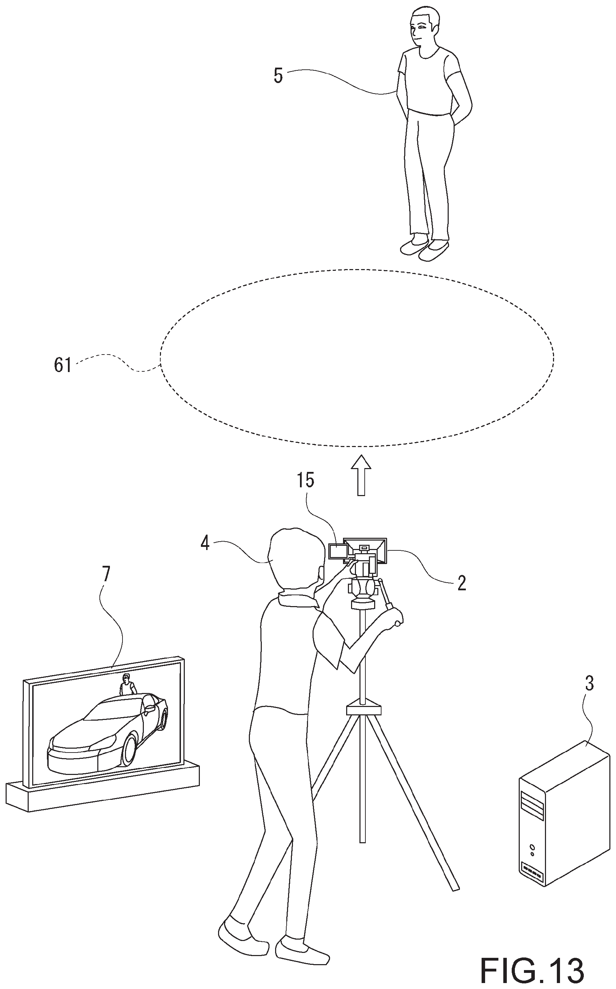

Fig. 12 is a diagram showing an example of the control condition in the camera position and posture mode. Fig. 13 is a diagram showing another example of the control condition in the camera position and posture mode. It is noted that in Fig. 12, the virtual object 6 virtually arranged in a real space is illustrated in dashed lines.

The control condition is a change of the position or posture of the image pickup device 2, a distance between the image pickup device 2 and the virtual object 6 falling within a predetermined threshold value Th as shown in Fig. 12, or the image pickup device 2 entering a predetermined control switch area 61 as shown in Fig. 13. It is noted that the control switch area 61 can be set in advance by the cameraman 4 using a coordinate system in the real space (or a coordinate system in the virtual space).

When the control condition is a change of the position or posture of the image pickup device 2 and the image pickup device 2 entering the predetermined control switch area 61, the entire range is determined as the display control range.

When the control condition is the distance between the image pickup device 2 and the virtual object 6 falling within the threshold value Th, the range within the threshold value Th is determined as the display control range.

### [2.3.1. Case where change of position or posture of image pickup device 2 is set as control condition]

When the change of the position or posture of the image pickup device 2 is set as the control condition, the condition judgment unit 54 judges whether or not the control condition has been met based on the position and posture of the image pickup device 2 that are included in the camera information 110. The condition judgment unit 54 judges that the control condition has been met when the position and posture of the image pickup device 2 that are included in the camera information 110 have changed. Furthermore, the condition judgment unit 54 judges that the control condition has not been met when the position and posture of the image pickup device 2 that are included in the camera information 110 have not changed.

In this case, in the image processing system 1, display control of the monitor synthesis image 104 is performed in a manner similar to that in the manual mode. For example, in the image processing system 1, when controlling the display and non-display of the virtual object 6, the monitor synthesis image 104 in which the virtual object 6 is superimposed is displayed on the display unit 15 and the monitor 7 if the control condition is not met, and the monitor synthesis image 104 in which the virtual object 6 is not superimposed is displayed on the display unit 15 and the monitor 7 if the control condition is met, as shown in Figs. 9.

Also in the image processing system 1, when controlling the display mode of the virtual object 6, the monitor synthesis image 104 in which the virtual object 6 in the normal display mode is superimposed is displayed on the display unit 15 and the monitor 7 if the control condition is not met, and the monitor synthesis image 104 in which the virtual object 6 in the post-change display mode is superimposed is displayed on the display unit 15 and the monitor 7 if the control condition is met, as shown in Figs. 10.

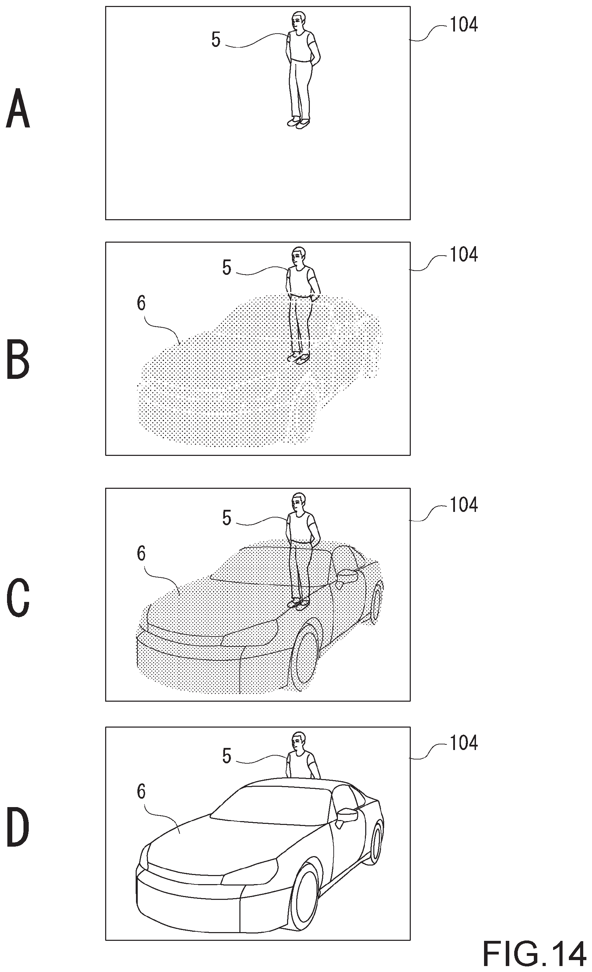

Figs. 14 are diagrams showing changes in the transparency of the virtual object 6 in the case where a change of the position or posture of the image pickup device 2 is set as the control condition in the camera position and posture mode.

Further, in the image processing system 1, when changing the transparency of the virtual object 6, the condition judgment unit 54 notifies the CG generation unit 51 or the image editing unit 55 that the control condition has been met. The CG generation unit 51 or the image editing unit 55 generates a CG image 102 in which the transparency of the virtual object 6 decreases over time, and outputs the CG image 102 to the second synthesis unit 56. The second synthesis unit 56 generates a monitor synthesis image 104 in which the virtual object 6 whose transparency has decreased over time is superimposed on the captured image 101.

As a result, as shown in order from Fig. 14A to Fig. 14D, for example, the monitor synthesis image 104 in which the transparency of the virtual object 6 decreases as time elapses after the control condition is met is displayed on the display unit 15 and the monitor 7.

In this manner, when the position or posture of the image pickup device 2 is changing, that is, when the cameraman 4 is moving the image pickup device 2, it is possible to suppress a situation where the virtual object 6 displayed on the display unit 15 and the monitor 7 hinders the movement, by hiding the virtual object 6 or changing the display mode of the virtual object 6. It is also possible to facilitate the image pickup task of the cameraman 4.

### [2.3.2. Case where image pickup device 2 entering predetermined control switch area 61 is set as control condition]

When the image pickup device 2 entering the predetermined control switch area 61 is set as the control condition, the condition judgment unit 54 judges whether or not the control condition has been met based on the position and posture of the image pickup device 2 that are included in the camera information 110. The condition judgment unit 54 calculates the position of the image pickup device 2, and judges that the control condition has been met when the image pickup device 2 is within the control switch area 61. Furthermore, the condition judgment unit 54 judges that the control condition is not met when the image pickup device 2 is outside the control switch area 61.

In this case, in the image processing system 1, display control similar to that performed in the case where a change of the position or posture of the image pickup device 2 is set as the control condition is performed. It is noted that the display control has been described above, so descriptions thereof will be omitted herein.

In this manner, when the image pickup device 2 has entered the control switch area 61, that is, when the image pickup device 2 has entered an arbitrary position, it is possible to hide the virtual object 6 or change the display mode of the virtual object 6. This makes it possible to display the virtual object 6 in a way that reflects the intention of the cameraman 4, thus facilitating the image pickup task of the cameraman 4.

### [2.3.3. Case where distance between image pickup device 2 and virtual object 6 falling within predetermined threshold value Th is set as control condition]

When the distance (coordinate distance; the same holds true hereinbelow) between the image pickup device 2 and the virtual object 6 falling within the predetermined threshold value Th is set as the control condition, the condition judgment unit 54 judges whether or not the control condition has been met based on the position and posture of the image pickup device 2 that are included in the camera information 110. The condition judgment unit 54 calculates the positions of the image pickup device 2 and the virtual object 6, and judges that the control condition has been met when the distance between the image pickup device 2 and the virtual object 6 is within the threshold value Th. Furthermore, the condition judgment unit 54 judges that the control condition is not met when the distance between the image pickup device 2 and the virtual object 6 is not within the threshold value Th.

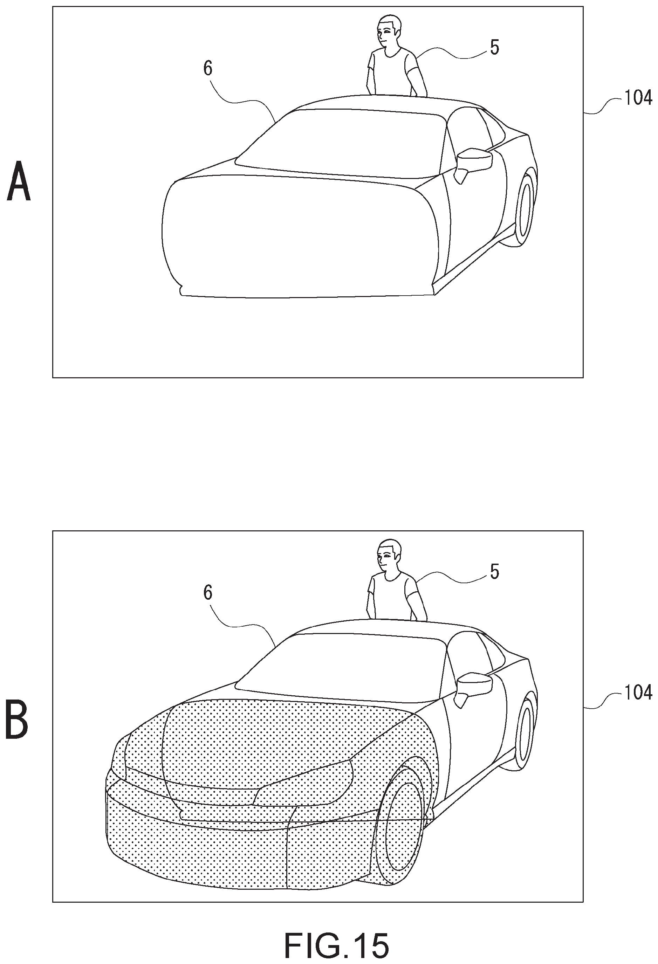

Figs. 15 are diagrams showing display control of the virtual object 6 in the case where the distance between the image pickup device 2 and the virtual object 6 falling within the predetermined threshold value Th is set as the control condition.

When the control condition is met, the condition judgment unit 54 notifies the CG generation unit 51 or the image editing unit 55 that the control condition has been met. When controlling the display and non-display of the virtual object 6, the CG generation unit 51 or the image editing unit 55 generates a CG image 102 in which a portion of the virtual object 6 whose distance from the image pickup device 2 is within the threshold value Th is hidden, and outputs the CG image 102 to the second synthesis unit 56. The second synthesis unit 56 generates a monitor synthesis image 104 in which a portion of the virtual object 6 whose distance from the image pickup device 2 is within the threshold value Th is hidden as shown in Fig. 15A, and outputs the monitor synthesis image 104 to the image pickup device 2 and the monitor 7. As a result, the monitor synthesis image 104 in which the virtual object 6, in which a portion whose distance from the image pickup device 2 is within the threshold value Th is hidden, is superimposed is displayed on the display unit 15 and the monitor 7.

In this manner, since a portion whose distance from the image pickup device 2 is within the threshold value Th is hidden, it becomes possible to hide a portion that hinders the movement of the cameraman 4, and suppress a situation where the virtual object 6 hinders the movement.

Furthermore, when controlling the display mode of the virtual object 6, if the control condition is met, the condition judgment unit 54 notifies the CG generation unit 51 or the image editing unit 55 that the control condition has been met. The CG generation unit 51 or the image editing unit 55 generates a CG image 102 in which a portion of the virtual object 6 whose distance from the image pickup device 2 is within the threshold value Th is displayed in the post-change display mode, and outputs the CG image 102 to the second synthesis unit 56. The second synthesis unit 56 generates a monitor synthesis image 104 in which a portion of the virtual object 6 whose distance from the image pickup device 2 is within the threshold value Th is displayed in the post-change display mode (herein, the semi-transparent display mode) as shown in Fig. 15B, and outputs the monitor synthesis image 104 to the image pickup device 2 and the monitor 7. As a result, the monitor synthesis image 104 in which the virtual object 6, in which a portion whose distance from the image pickup device 2 is within the threshold value Th is displayed in a different display mode, is superimposed is displayed on the display unit 15 and the monitor 7.

In this manner, since the portion whose distance from the image pickup device 2 is within the threshold value Th is displayed in a different display mode, it is possible to suppress a situation where the virtual object 6 hinders the movement.

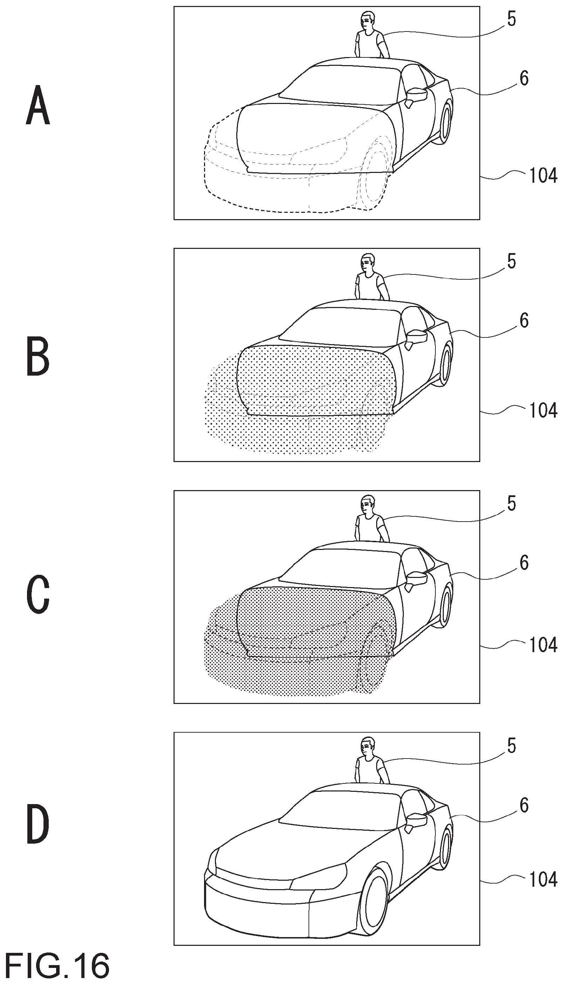

Figs. 16 are diagrams showing changes in the transparency of the virtual object 6 in the case where the distance between the image pickup device 2 and the virtual object 6 falling within the predetermined threshold value Th is set as the control condition.

Further, when changing the transparency of the virtual object 6, the condition judgment unit 54 notifies the CG generation unit 51 or the image editing unit 55 that the control condition has been met. The CG generation unit 51 or the image editing unit 55 generates a CG image 102 in which transparency of a portion of the virtual object 6 whose distance from the image pickup device 2 is within the threshold value Th decreases over time, and outputs the CG image 102 to the second synthesis unit 56. The second synthesis unit 56 generates a monitor synthesis image 104 in which the virtual object 6, that has a portion where the transparency decreases over time, is superimposed on the captured image 101.

As a result, as shown in order from Figs. 16A to 16D, for example, the monitor synthesis image 104 in which the transparency of the portion of the virtual object 6 whose distance from the image pickup device 2 is within the threshold value Th decreases as time elapses after the control condition is met is displayed on the display unit 15 and the monitor 7.

In this manner, by changing the transparency of the portion whose distance from the image pickup device 2 is within the threshold value Th, it is possible to suppress a situation where the virtual object 6 displayed on the display unit 15 and the monitor 7 hinders the movement. It is also possible to facilitate the image pickup task of the cameraman 4.

### [2.4. Image pickup control mode]

In the image pickup control mode, an entire range or a partial range is determined as the display control range of the virtual object 6. In the image pickup control mode, the display control range is determined by the cameraman 4 or the like.

As will be described later in detail, an entire range, a range that is more on a rear side or front side than a focus position, or a range other than a depth of field can be selected as the display control range.

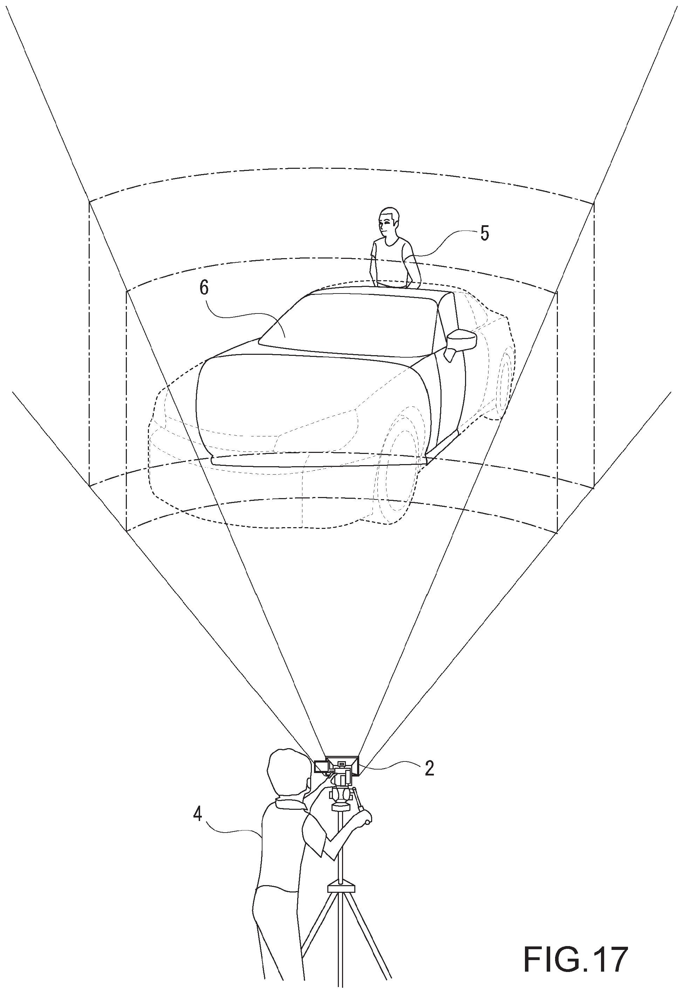

Fig. 17 is a diagram illustrating the depth of field. As shown in Fig. 17, the image pickup device 2 is capable of focusing on a position at which the virtual object 6 that is not actually captured is present. In this case, a portion of the virtual object 6 that corresponds to the depth of field indicated by dashed-dotted lines in Fig. 17 (a portion indicated by solid lines in Fig. 17) is being focused, while portions on the front and rear side thereof (portions indicated by dashed lines in Fig. 17) are out of focus.

In this regard, in the image pickup control mode, the display control of the virtual object 6 is performed using the focus position (or depth of field) as a reference, to enable the cameraman 4 to recognize the focus position.

The control condition is a change of the focus position (focal length) of the image pickup device 2.

The condition judgment unit 54 judges whether or not the control condition has been met based on the focal length included in the camera information 110. The condition judgment unit 54 judges that the control condition has been met when the focal length included in the camera information 110 has changed. On the other hand, the condition judgment unit 54 judges that the control condition has not been met when the focal length included in the camera information 110 has not changed.

When the control condition is met, the condition judgment unit 54 notifies the CG generation unit 51 or the image editing unit 55 that the control condition has been met.

### [2.4.1. Control of display and non-display of virtual object 6 in image pickup control mode]

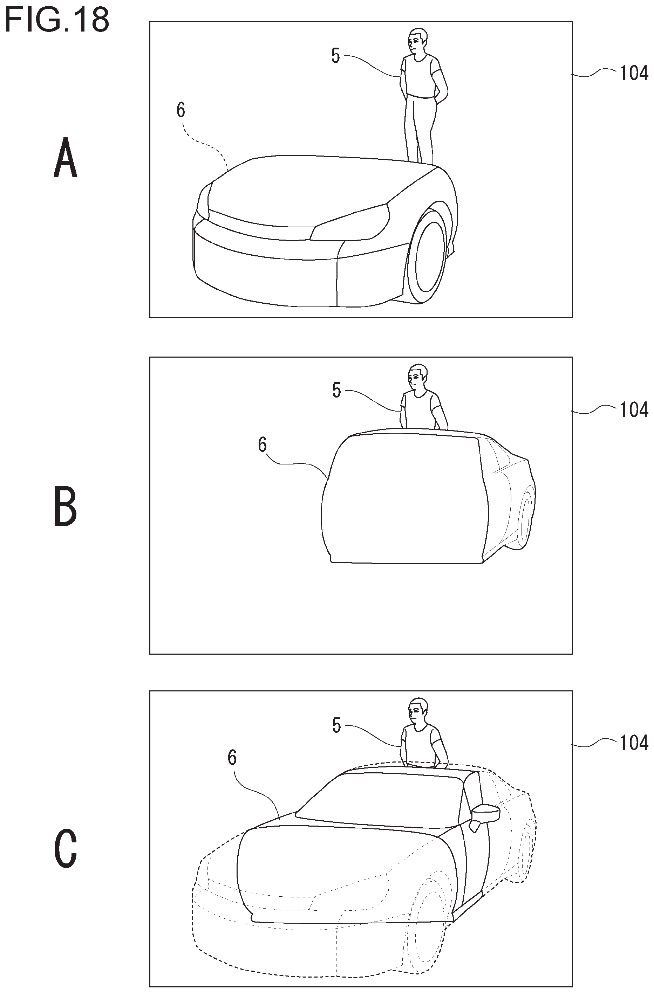

Figs. 18 are diagrams illustrating control of display and non-display of the virtual object 6 in the image pickup control mode.

When a rear side of the focus position is determined as the display control range, the CG generation unit 51 or the image editing unit 55 generates a CG image 102 in which a portion of the virtual object 6 that is more on the rear side than the focus position is hidden as shown in Fig. 18A, and outputs the CG image 102 to the second synthesis unit 56. The second synthesis unit 56 synthesizes the input CG image 102 with the captured image 101 to generate a monitor synthesis image 104, and outputs the monitor synthesis image 104 to the image pickup device 2 and the monitor 7. As a result, the monitor synthesis image 104 in which the virtual object 6, in which the portion that is more on the rear side than the focus position is hidden, is superimposed is displayed on the display unit 15 and the monitor 7.

By hiding the portion that is more on the rear side than the focus position in this manner, it becomes possible for the cameraman 4 to easily recognize the focus position, and for the cameraman 4 to check only a portion that is more on the front side than the focus position.

Furthermore, when a front side of the focus position is determined as the display control range, the CG generation unit 51 or the image editing unit 55 generates a CG image 102 in which a portion of the virtual object 6 that is more on the front side than the focus position is hidden as shown in Fig. 18B, and outputs the CG image 102 to the second synthesis unit 56. The second synthesis unit 56 synthesizes the input CG image 102 with the captured image 101 to generate a monitor synthesis image 104, and outputs the monitor synthesis image 104 to the image pickup device 2 and the monitor 7. As a result, the monitor synthesis image 104 in which the virtual object 6, in which the portion that is more on the front side than the focus position is hidden, is superimposed is displayed on the display unit 15 and the monitor 7.

By hiding the portion that is more on the front side than the focus position in this manner, it becomes possible for the cameraman 4 to easily recognize the focus position, and for the cameraman 4 to check only a portion that is more on the rear side than the focus position.

Furthermore, when a range other than the depth of field is determined as the display control range, the CG generation unit 51 or the image editing unit 55 generates a CG image 102 in which a range of the virtual object 6 other than the depth of field is hidden (indicated by dashed lines in the figure) as shown in Fig. 18C, and outputs the CG image 102 to the second synthesis unit 56. The second synthesis unit 56 synthesizes the input CG image 102 with the captured image 101 to generate a monitor synthesis image 104, and outputs the monitor synthesis image 104 to the image pickup device 2 and the monitor 7. As a result, the monitor synthesis image 104 in which the virtual object 6, that is only within the depth of field, is superimposed is displayed on the display unit 15 and the monitor 7.

By displaying the virtual object 6 that is only within the depth of field in this manner, it becomes possible for the cameraman 4 to easily recognize the focus position, and for the cameraman 4 to check only the range in focus.

### [2.4.2. Control of display mode of virtual object 6 in image pickup control mode]

When the rear side of the focus position is determined as the display control range, the CG generation unit 51 or the image editing unit 55 generates a CG image 102 in which a portion of the virtual object 6 that is more on the rear side than the focus position is displayed in the post-change display mode, and outputs the CG image 102 to the second synthesis unit 56. The second synthesis unit 56 synthesizes the input CG image 102 with the captured image 101 to generate a monitor synthesis image 104, and outputs the monitor synthesis image 104 to the image pickup device 2 and the monitor 7. As a result, the monitor synthesis image 104 in which the virtual object 6, in which the portion that is more on the rear side than the focus position is displayed in the post-change display mode, is superimposed is displayed on the display unit 15 and the monitor 7.

Furthermore, when the front side of the focus position is determined as the display control range, the CG generation unit 51 or the image editing unit 55 generates a CG image 102 in which a portion of the virtual object 6 that is more on the front side than the focus position is displayed in the post-change display mode, and outputs the CG image 102 to the second synthesis unit 56. The second synthesis unit 56 synthesizes the input CG image 102 with the captured image 101 to generate a monitor synthesis image 104, and outputs the monitor synthesis image 104 to the image pickup device 2 and the monitor 7. As a result, the monitor synthesis image 104 in which the virtual object 6, in which the portion that is more on the front side than the focus position is displayed in the post-change display mode, is superimposed is displayed on the display unit 15 and the monitor 7.

Furthermore, when a range other than the depth of field is determined as the display control range, the CG generation unit 51 or the image editing unit 55 generates a CG image 102 in which a range of the virtual object 6 other than the depth of field is displayed in the post-change display mode, and outputs the CG image 102 to the second synthesis unit 56. The second synthesis unit 56 synthesizes the input CG image 102 with the captured image 101 to generate a monitor synthesis image 104, and outputs the monitor synthesis image 104 to the image pickup device 2 and the monitor 7. As a result, the monitor synthesis image 104 in which the virtual object 6, in which the range other than the depth of field is displayed in the post-change display mode, is superimposed is displayed on the display unit 15 and the monitor 7.

### [2.4.3. Change of transparency of virtual object 6 in image pickup control mode]

When the rear side of the focus position is determined as the display control range, the CG generation unit 51 or the image editing unit 55 generates a CG image 102 in which transparency of a portion of the virtual object 6 that is more on the rear side than the focus position decreases over time, and outputs the CG image 102 to the second synthesis unit 56. The second synthesis unit 56 generates a monitor synthesis image 104 in which the virtual object 6, which includes a portion where the transparency decreases over time, is superimposed on the captured image 101, and outputs the monitor synthesis image 104 to the image pickup device 2 and the monitor 7. As a result, the monitor synthesis image 104, in which the transparency of the portion that is more on the front side than the focus position decreases over time, is displayed on the display unit 15 and the monitor 7.

When the front side of the focus position is determined as the display control range, the CG generation unit 51 or the image editing unit 55 generates a CG image 102 in which transparency of a portion of the virtual object 6 that is more on the front side than the focus position decreases over time, and outputs the CG image 102 to the second synthesis unit 56. The second synthesis unit 56 generates a monitor synthesis image 104 in which the virtual object 6, which includes a portion where the transparency decreases over time, is superimposed on the captured image 101, and outputs the monitor synthesis image 104 to the image pickup device 2 and the monitor 7. As a result, the monitor synthesis image 104, in which the transparency of the portion that is more on the rear side than the focus position decreases over time, is displayed on the display unit 15 and the monitor 7.

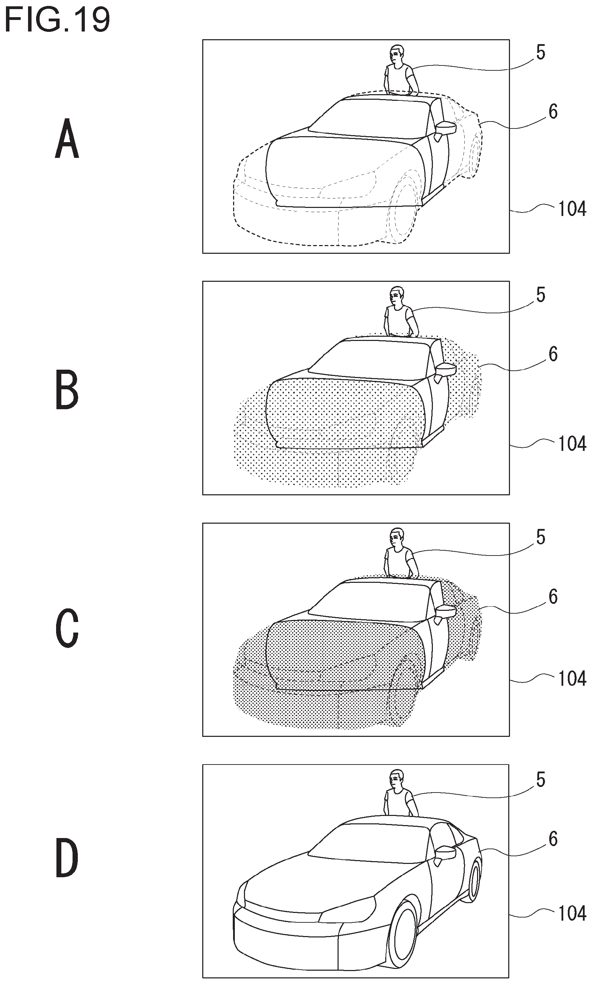

Figs. 19 are diagrams showing changes in the transparency of the virtual object 6 in the case where a range other than the depth of field is determined as the display control range in the image pickup control mode.

When a range other than the depth of field is determined as the display control range, the CG generation unit 51 or the image editing unit 55 generates a CG image 102 in which transparency of a range of the virtual object 6 other than the depth of field decreases over time, and outputs the CG image 102 to the second synthesis unit 56. The second synthesis unit 56 generates a monitor synthesis image 104 in which the virtual object 6, which includes a portion where the transparency decreases over time, is superimposed on the captured image 101, and outputs the monitor synthesis image 104 to the image pickup device 2 and the monitor 7. As a result, the monitor synthesis image 104, in which the transparency of the range other than the depth of field decreases over time as shown in order from Figs. 19A to 19D, is displayed on the display unit 15 and the monitor 7.

By displaying the virtual object 6 that is only within the depth of field in this manner, it becomes possible for the cameraman 4 to easily recognize the focus position, and for the cameraman 4 to check only the range in focus.

### [2.5. Virtual object mode]

In the virtual object mode, an entire range or a partial range is determined as the display control range of the virtual object 6. In the virtual object mode, the display control range is determined according to the control condition to be set.

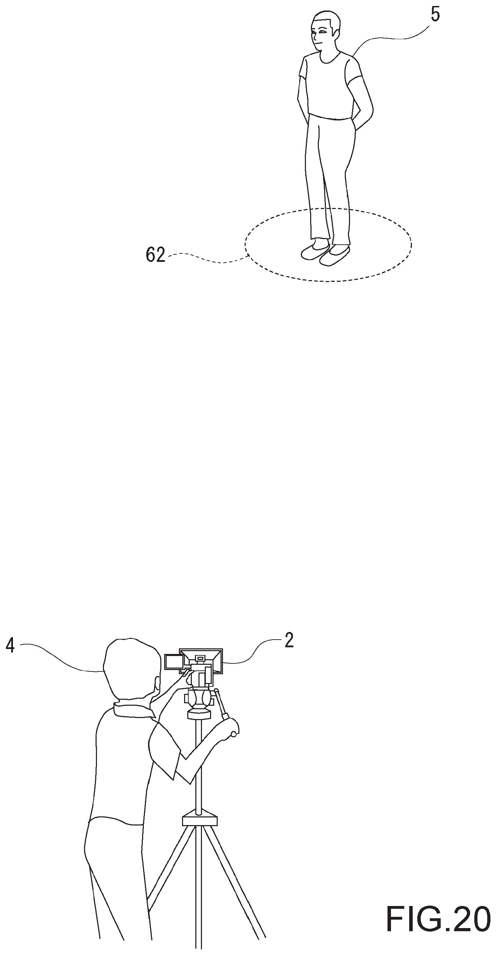

Fig. 20 is a diagram showing an example of the control condition in the virtual object mode.

The control condition includes the virtual object 6 entering a control switch area 62 as shown in Fig. 20, the virtual object 6 entering an angle of view of the image pickup device 2, and a display control condition assigned to the virtual object 6 being met. It is noted that the control switch area 62 can be preset by the cameraman 4 using the coordinate system in the real space (or the coordinate system in the virtual space).

When the control condition is that the virtual object 6 has entered the control switch area 62 as shown in Fig. 20, a range within the control switch area 62 is determined as the display control range.

When the control condition is that the virtual object 6 has entered the angle of view of the image pickup device 2, the entire area is determined as the display control range.

When the control condition is that the display control condition assigned to the virtual object 6 has been met, the display control range is determined for each virtual object 6.

### [2.5.1. Case where virtual object 6 entering control switch area 62 is set as control condition]

When the virtual object 6 entering the control switch area 62 is set as the control condition, the condition judgment unit 54 judges whether or not the control condition has been met based on the position of the virtual object 6 included in the CG model and the position of the control switch area 62. The condition judgment unit 54 judges that the control condition has been met when the virtual object 6 is within the control switch area 62. Further, the condition judgment unit 54 judges that the control condition has not been met when the virtual object 6 is not within the control switch area 62.

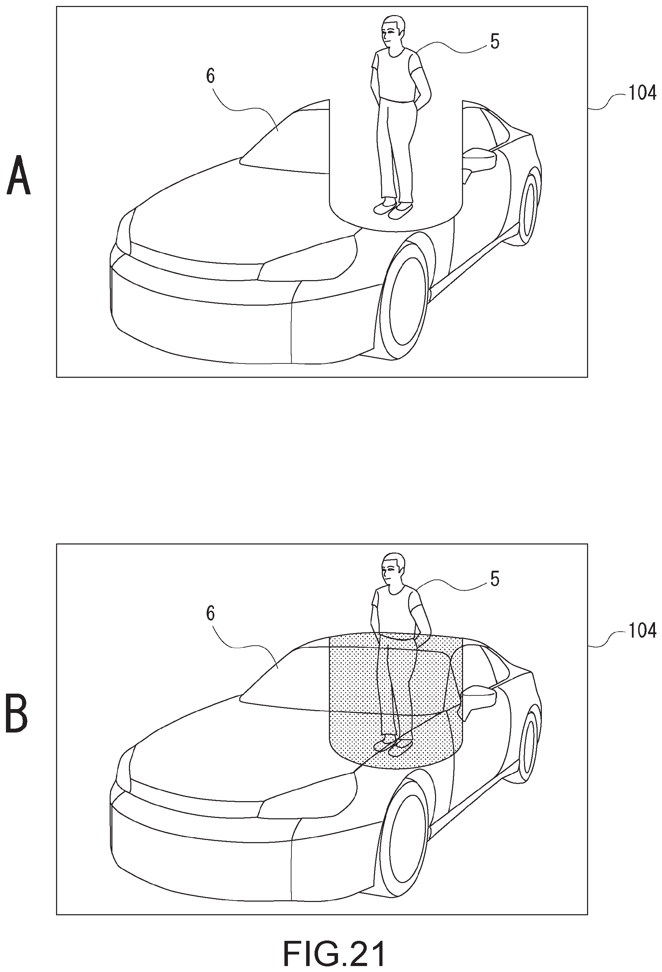

Figs. 21 are diagrams showing display control of the virtual object 6 in the case where the virtual object 6 entering the control switch area 62 is set as the control condition.

When the control condition is met, the condition judgment unit 54 notifies the CG generation unit 51 or the image editing unit 55 that the control condition has been met. When controlling display and non-display of the virtual object 6, the CG generation unit 51 or the image editing unit 55 generates a CG image 102 in which a portion of the virtual object 6 that is within the control switch area 62 is hidden, and outputs the CG image 102 to the second synthesis unit 56. The second synthesis unit 56 generates a monitor synthesis image 104 in which the portion of the virtual object 6 that is within the control switch area 62 is hidden as shown in Fig. 21A, and outputs the monitor synthesis image 104 to the image pickup device 2 and the monitor 7. As a result, the monitor synthesis image 104 in which the virtual object 6, in which the portion that is within the control switch area 62 hidden, is superimposed is displayed on the display unit 15 and the monitor 7.

Therefore, when the virtual object 6 enters a predetermined control switch area 62, that control switch area 62 can be easily hidden. It also becomes possible for the cameraman 4 to constantly check the inside of the control switch area 62. Furthermore, since the display control can be performed according to the position of the virtual object 6 by merely designating the position in the real space or the virtual space, controllability of the display control of the virtual object 6 can be improved.

Furthermore, when controlling the display mode of the virtual object 6, the CG generation unit 51 or the image editing unit 55 generates a CG image 102 in which a portion of the virtual object 6 that is within the control switch area 62 is displayed in the post-change display mode, and outputs the CG image 102 to the second synthesis unit 56. The second synthesis unit 56 generates a monitor synthesis image 104 in which the portion of the virtual object 6 that is within the control switch area 62 is displayed in the post-change display mode (herein, the semi-transparent display mode) as shown in Fig. 21B, and outputs the monitor synthesis image 104 to the image pickup device 2 and the monitor 7. As a result, the monitor synthesis image 104 in which the virtual object 6, in which the portion that is within the control switch area 62 is displayed in the post-change display mode, is superimposed is displayed on the display unit 15 and the monitor 7.

In this manner, when the virtual object 6 enters the predetermined control switch area 62, that control switch area 62 can be displayed in a different display mode. Furthermore, since control can be performed according to the position of the virtual object 6 by merely designating the position in the real space or the virtual space, controllability of display control of the virtual object 6 can be improved.

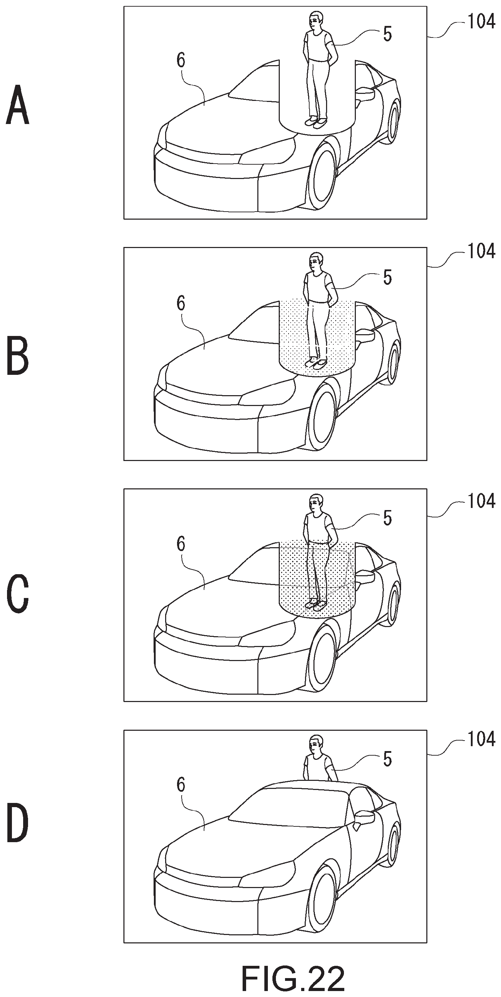

Figs. 22 are diagrams showing changes in the transparency of the virtual object 6 in the case where the virtual object 6 entering the control switch area 62 is set as the control condition.

When changing the transparency of the virtual object 6, the condition judgment unit 54 notifies the CG generation unit 51 or the image editing unit 55 that the control condition has been met. The CG generation unit 51 or the image editing unit 55 generates a CG image 102 in which transparency of a portion of the virtual object 6 that is within the control switch area 62 decreases over time, and outputs the CG image 102 to the second synthesis unit 56. The second synthesis unit 56 generates a monitor synthesis image 104 in which the virtual object 6, which includes the portion where the transparency decreases over time, is superimposed on the captured image 101.

As a result, the monitor synthesis image 104 in which the transparency of the portion of the virtual object 6 that is within the control switch area 62 decreases as time elapses after the control condition is met, as shown in order from Figs. 22A to 22D, for example, is displayed on the display unit 15 and the monitor 7.

By changing the transparency of the portion of the virtual object 6 that is within the control switch area 62 in this manner, it becomes possible for the cameraman 4 to check the real object 5 and the virtual object 6 within the control switch area 62.

### [2.5.2. Case where virtual object 6 entering angle of view of image pickup device 2 is set as control condition]

When the virtual object 6 entering the angle of view of the image pickup device 2 is set as the control condition, the condition judgment unit 54 judges whether or not the control condition has been met based on the position of the virtual object 6 included in the CG model and the angle of view and/or the like included in the camera information 110. The condition judgment unit 54 judges that the control condition has been met when the virtual object 6 is within the angle of view of the image pickup device 2. Further, the condition judgment unit 54 judges that the control condition has not been met when the virtual object 6 is not within the angle of view of the image pickup device 2.

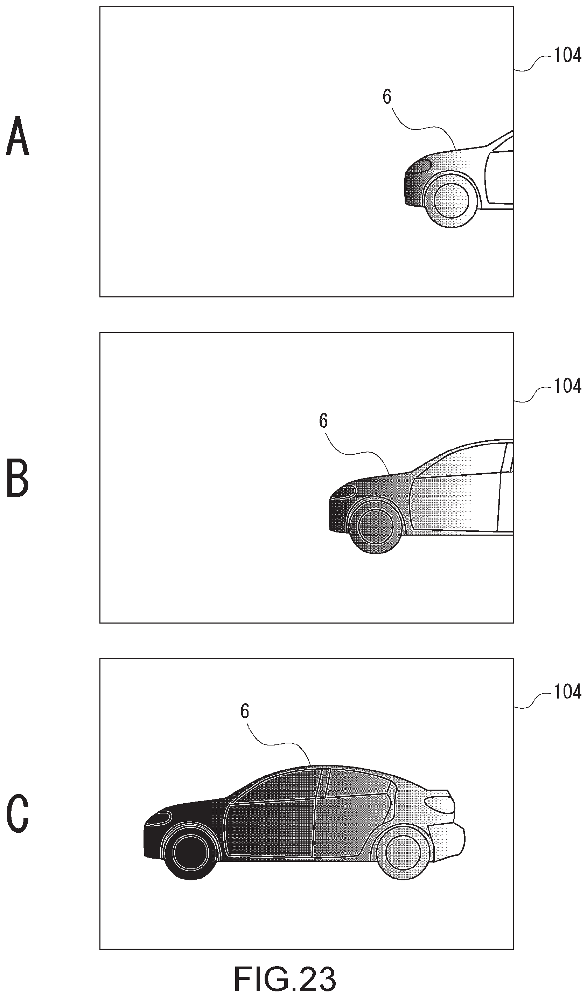

Figs. 23 are diagrams showing changes in the transparency of the virtual object 6 in the case where the virtual object 6 entering the angle of view of the image pickup device 2 is set as the control condition. It is noted that Figs. 23 show a case where the virtual object 6 is moving from right to left. Also in Fig. 23, the color fill becomes darker as the transparency decreases.

When the control condition is met, the condition judgment unit 54 notifies the CG generation unit 51 or the image editing unit 55 that the control condition has been met. The CG generation unit 51 or the image editing unit 55 generates a CG image 102 such that the transparency decreases over time from a portion of the virtual object 6 that has entered the angle of view as shown in Figs. 23, and outputs the CG image 102 to the second synthesis unit 56. The second synthesis unit 56 generates a monitor synthesis image 104 in which the virtual object 6, which includes the portion where the transparency decreases over time after entering the angle of view, is superimposed on the captured image 101.

As a result, the monitor synthesis image 104 in which the transparency of the portion of the virtual object 6 that has entered the angle of view decreases as the time that has elapsed since entering the angle of view increases, as shown in order from Figs. 23A to 23C, for example, is displayed on the display unit 15 and the monitor 7.

Therefore, in the image processing system 1, it is possible to check the time when the virtual object 6 has entered the angle of view according to the transparency.

It is noted that when the virtual object 6 entering the angle of view of the image pickup device 2 is set as the control condition, the control of the display and non-display of the virtual object 6 and the control of the display mode of the virtual object 6 are not performed. However, it is also possible to perform the control of the display and non-display of the virtual object 6 and the control of the display mode of the virtual object 6 when the virtual object 6 entering the angle of view of the image pickup device 2 is set as the control condition.

### [2.5.3. Case where display control condition assigned to virtual object 6 being met is set as control condition]

When the display control condition assigned to the virtual object 6 being met is set as the control condition, the condition judgment unit 54 judges whether or not the control condition has been met based on whether or not the display control condition assigned to the virtual object 6 has been met. The condition judgment unit 54 judges that the control condition has been met when the display control condition assigned to the virtual object 6 is met. Furthermore, the condition judgment unit 54 judges that the control condition has not been met when the display control condition assigned to the virtual object 6 is not met. When the control condition is met, the condition judgment unit 54 notifies the CG generation unit 51 or the image editing unit 55 that the control condition has been met.

When controlling the display and non-display of the virtual object 6, the CG generation unit 51 or the image editing unit 55 generates a CG image 102 in which the virtual object 6 to which the display control condition has been assigned is hidden, and outputs the CG image 102 to the second synthesis unit 56. The second synthesis unit 56 generates a monitor synthesis image 104 in which the virtual object 6 to which the display control condition has been assigned is hidden, and outputs the monitor synthesis image 104 to the image pickup device 2 and the monitor 7. As a result, the monitor synthesis image 104 in which the virtual object 6 to which the display control condition has been assigned is not superimposed is displayed on the display unit 15 and the monitor 7.

Therefore, in the image processing system 1, it becomes possible to control the display and non-display for each virtual object 6.

When controlling the display mode of the virtual object 6, the CG generation unit 51 or the image editing unit 55 generates a CG image 102 in which the virtual object 6 to which the display control condition has been assigned is displayed in the post-change display mode, and outputs the CG image 102 to the second synthesis unit 56. The second synthesis unit 56 generates a monitor synthesis image 104 in which the virtual object 6 to which the display control condition has been assigned is displayed in the post-change display mode, and outputs the monitor synthesis image 104 to the image pickup device 2 and the monitor 7. As a result, the monitor synthesis image 104 in which the virtual object 6 to which the display control condition has been assigned is superimposed in a different display mode, is displayed on the display unit 15 and the monitor 7.

Therefore, in the image processing system 1, it becomes possible to control the display mode for each virtual object 6.

When changing the transparency of the virtual object 6, the CG generation unit 51 or the image editing unit 55 generates a CG image 102 in which the transparency of the virtual object 6 to which the display control condition has been assigned decreases over time, and outputs the CG image 102 to the second synthesis unit 56. The second synthesis unit 56 generates a monitor synthesis image 104 in which the virtual object 6, which includes a portion where the transparency decreases over time, is superimposed on the captured image 101, and outputs the monitor synthesis image 104 to the image pickup device 2 and the monitor 7. As a result, the monitor synthesis image 104 in which the transparency of the virtual object 6 to which the display control condition has been assigned decreases over time, is displayed on the display unit 15 and the monitor 7.

Therefore, in the image processing system 1, it becomes possible to change the transparency for each virtual object 6.

### [2.6. Real object mode]

In the real object mode, a partial range is determined as the display control range of the virtual object 6. In the real object mode, a periphery of the real object 5 recognized by the image recognition unit 53 is determined as the display control range.

The control condition is set such that a distance between the real object 5 recognized by the image recognition unit 53 and the virtual object 6 is equal to or smaller than a predetermined value.

The image recognition unit 53 recognizes a predetermined real object 5 from the captured image 101. The condition judgment unit 54 calculates a distance between the real object 5 recognized by the image recognition unit 53 and the virtual object 6 on the coordinate. It is noted that the distance calculated herein may be a three-dimensional distance, or may be a two-dimensional distance.

The condition judgment unit 54 judges whether or not the control condition has been met based on the calculated distance. The condition judgment unit 54 judges that the control condition has been met when the calculated distance is equal to or smaller than the predetermined value. Furthermore, the condition judgment unit 54 judges that the control condition has not been met when the calculated distance is not equal to or smaller than the predetermined value.

When the control condition is met, the condition judgment unit 54 notifies the CG generation unit 51 or the image editing unit 55 that the control condition has been met.

### [2.6.1. Control of display and non-display of virtual object 6 in real object mode]

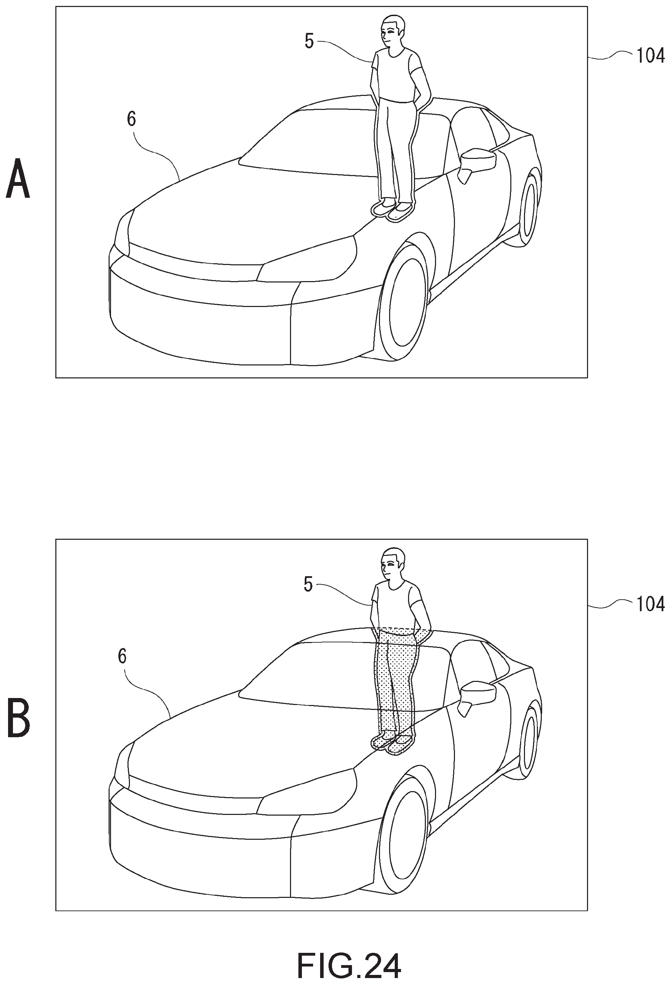

Figs. 24 are diagrams illustrating display control of the virtual object 6 in the real object mode.

The CG generation unit 51 or the image editing unit 55 generates a CG image 102 in which a portion of the virtual object 6 whose distance from the real object 5 is equal to or smaller than the predetermined value is hidden as shown in Fig. 24A, and outputs the CG image 102 to the second synthesis unit 56. The second synthesis unit 56 synthesizes the input CG image 102 with the captured image 101 to generate a monitor synthesis image 104, and outputs the monitor synthesis image 104 to the image pickup device 2 and the monitor 7. As a result, the monitor synthesis image 104 in which the virtual object 6 is not superimposed on the real object 5 is displayed on the display unit 15 and the monitor 7.

By displaying the image in which the virtual object 6 is not superimposed on the real object 5 in this manner, it becomes possible for the cameraman 4 to easily recognize the real object 5 and the virtual object 6.

### [2.6.2. Control of display mode of virtual object 6 in image pickup control mode]

The CG generation unit 51 or the image editing unit 55 generates a CG image 102 in which the portion of the virtual object 6 whose distance from the real object 5 is equal to or smaller than the predetermined value is displayed in the post-change display mode (herein, the semi-transparent display mode) as shown in Fig. 24B, and outputs the CG image 102 to the second synthesis unit 56. The second synthesis unit 56 synthesizes the input CG image 102 with the captured image 101 to generate a monitor synthesis image 104, and outputs the monitor synthesis image 104 to the image pickup device 2 and the monitor 7. As a result, the monitor synthesis image 104 in which a portion of the virtual object 6 that overlaps with the real object 5 is displayed in a different display mode, is displayed on the display unit 15 and the monitor 7.

By displaying the portion of the virtual object 6 that overlaps with the real object 5 in a different display mode in this manner, it becomes possible for the cameraman 4 to easily recognize the real object 5 and the virtual object 6.

### [2.6.3. Change of transparency of virtual object 6 in image pickup control mode]

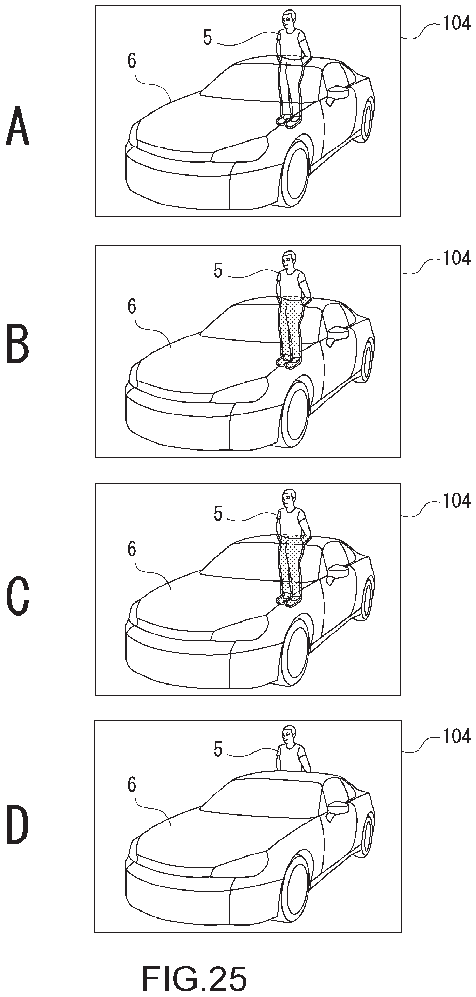

Figs. 25 are diagrams illustrating changes in the transparency of the virtual object 6 in the real object mode.

The CG generation unit 51 or the image editing unit 55 generates a CG image 102 in which the transparency of the portion of the virtual object 6 whose distance from the real object 5 is equal to or smaller than the predetermined value decreases over time, and outputs the CG image 102 to the second synthesis unit 56. The second synthesis unit 56 generates a monitor synthesis image 104 in which the virtual object 6, which includes the portion where the transparency decreases over time, is superimposed on the captured image 101, and outputs the monitor synthesis image 104 to the image pickup device 2 and the monitor 7. As a result, the monitor synthesis image 104 in which the transparency of the portion of the virtual object 6 that overlaps with the real object 5 decreases over time, as shown in order from Figs. 25A to 25D, is displayed on the display unit 15 and the monitor 7.

By decreasing the transparency of the portion of the virtual object 6 that overlaps with the real object 5 over time in this manner, it becomes possible for the cameraman 4 to easily recognize the real object 5 and the virtual object 6.

### <3. Icons 105 displayed in monitor synthesis image 104>

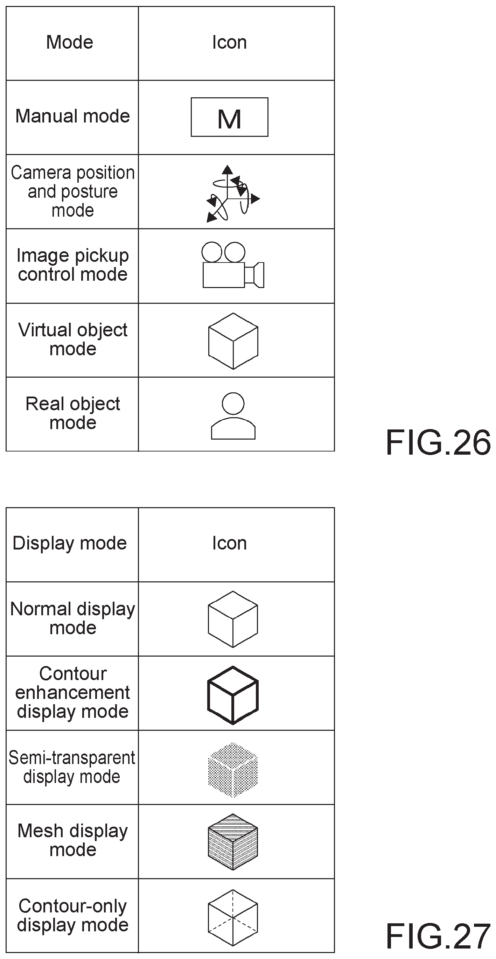

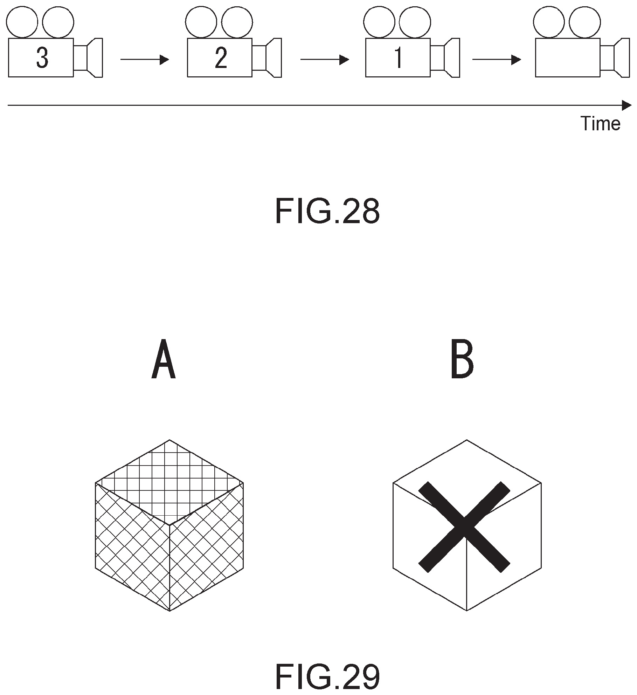

Fig. 26 is a diagram showing an example of icons 105 indicating the modes. Fig. 27 is a diagram showing an example of the icons 105 indicating the display modes. Fig. 28 is a diagram showing an example of the icons 105 indicating an elapse of time in the change of the transparency. Figs. 29 are diagrams showing the icons 105 during special processing.

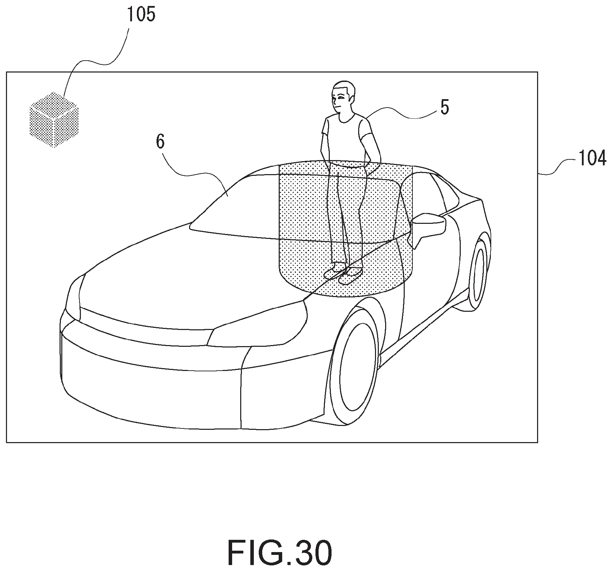

Fig. 30 is a diagram showing an example of the monitor synthesis image 104 in which the icon 105 is displayed. As shown in Fig. 30, the monitor synthesis image 104 described above may display the icon 105 indicating a currently set mode, display mode, elapsed time, and/or the like.

As shown in Fig. 26, shapes that differ for each of the set modes are associated with the icons 105. In addition, as shown in Fig. 27, contours or patterns that differ for each of the set display modes are associated with the icons 105. It is noted that Fig. 27 shows the display modes in the virtual object mode.

Therefore, since the mode is the virtual object mode and the display mode is the semi-transparent display mode in the example shown in Fig. 30, the icon 105 associated with the virtual object mode and the semi-transparent display mode is displayed in the monitor synthesis image 104.

Furthermore, as shown in Fig. 28, when the display mode of the virtual object 6 is to be changed over time, the icon 105 may display the remaining time until the display mode finally changes, like "3", "2", "1".

Furthermore, when an attribute that prohibits display control is assigned to the virtual object 6, for example, the icon 105 may be displayed in a color that indicates that the display control is prohibited (a color different from that of the icons shown in Figs. 26 and 27) as shown in Fig. 29A.

Furthermore, when the attribute that prohibits display control is assigned to the virtual object 6, for example, the icon 105 may be displayed with a cross mark indicating that the display control is prohibited as shown in Fig. 29B.

### <4. Processing flow of display control of virtual object 6>

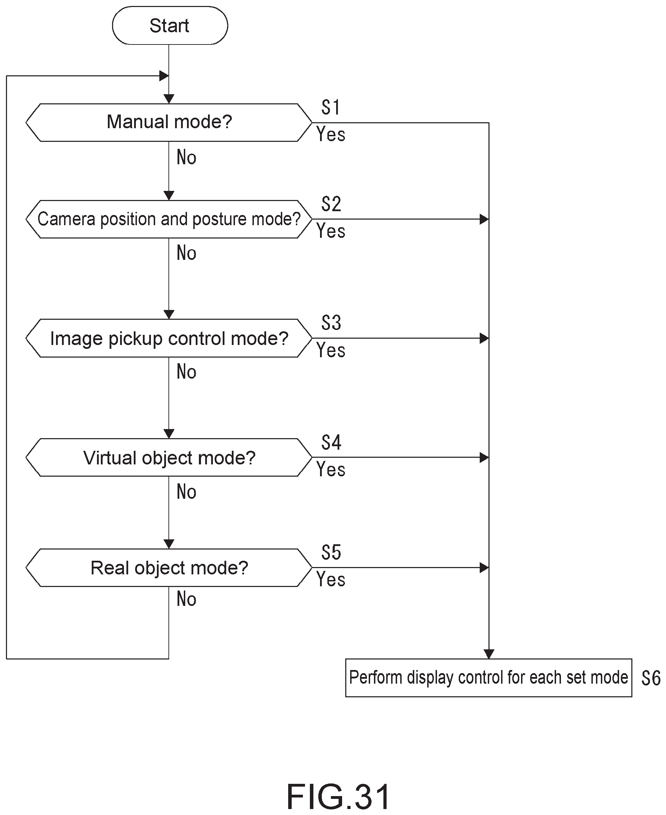

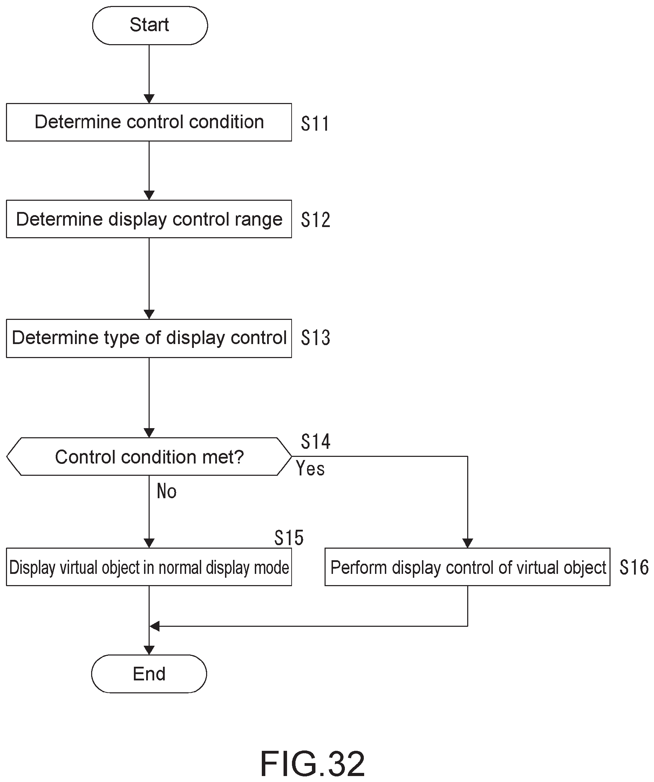

Fig. 31 is a flowchart showing a processing flow of display control of the virtual object 6. Fig. 32 is a flowchart showing a processing flow of display control for each set mode.

As shown in Fig. 31, in Step S1, the CPU 31 judges whether or not the manual mode is set. When the manual mode is set, the processing proceeds to Step S6. When the manual mode is not set, the processing proceeds to Step S2.

In Step S2, the CPU 31 judges whether or not the camera position and posture mode is set. When the camera position and posture mode is set, the processing proceeds to Step S6. When the camera position and posture mode is not set, the processing proceeds to Step S3.

In Step S3, the CPU 31 judges whether or not the image pickup control mode is set. When the image pickup control mode is set, the processing proceeds to Step S6. When the image pickup control mode is not set, the processing proceeds to Step S4.

In Step S4, the CPU 31 judges whether or not the virtual object mode is set. When the virtual object mode is set, the processing proceeds to Step S6. When the virtual object mode is not set, the processing proceeds to Step S5.

In Step S5, the CPU 31 judges whether or not the real object mode is set. When the real object mode is set, the processing proceeds to Step S6. When the real object mode is not set, the processing proceeds to Step S1.

In Step S6, the CPU 31 executes display control processing corresponding to the set mode. The display control processing for each mode will be described with reference to Fig. 32.

In this manner, when any of the manual mode, the camera position and posture mode, the image pickup control mode, the virtual object mode, or the subject mode is set, the display control processing corresponding to one of the modes prioritized in the order of the manual mode, the camera position and posture mode, the image pickup control mode, the virtual object mode, and the subject mode is executed.

It is noted that the order of Steps S1 to S5 does not need to be the order shown in Fig. 31, and may be a different order. Furthermore, the display control processing corresponding to the plurality of modes (e.g., the manual mode and another mode) out of the manual mode, the camera position and posture mode, the image pickup control mode, the virtual object mode, and the subject mode may be executed simultaneously in parallel.

As shown in Fig. 32, when executing the display control processing for each mode, in Step S11, the CPU 31 determines one of the control conditions for the set mode. Then, in Step S12, the CPU 31 determines a display control range corresponding to the set mode or the control condition. Then, in Step S13, the CPU 31 determines one of the types of display control (control of display and non-display of the virtual object 6, control of the display mode of the virtual object 6, or change in transparency of the virtual object 6).

In Step S14, it is judged whether or not the control condition has been met. When the control condition is not met, in Step S15, the CPU 31 generates a monitor synthesis image 104 such that the virtual object 6 is displayed in the normal display mode, and outputs the monitor synthesis image 104 to the image pickup device 2 and the monitor 7.

On the other hand, when the control condition is met, in Step S16, the CPU 31 generates a monitor synthesis image 104 such that the virtual object 6 is displayed based on the determined display control range, display mode, and/or the like, and outputs the monitor synthesis image 104 to the image pickup device 2 and the monitor 7.

### <5. Modified examples>

It is noted that the embodiment is not limited to the specific examples described above and may take various configurations as modified examples.

For example, the CPU 31 or GPU 34 of the image processing device 3 is configured to function as the CG generation unit 51, the first synthesis unit 52, the image recognition unit 53, the condition judgment unit 54, the image editing unit 55, and the second synthesis unit 56.

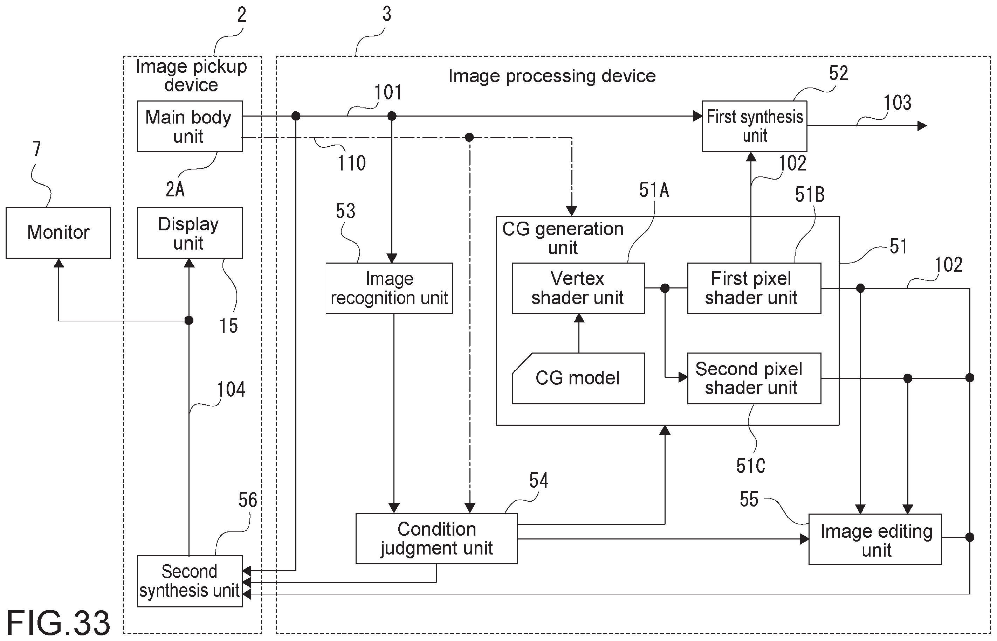

However, as shown in Fig. 33, the CPU 31 or GPU 34 of the image processing device 3 may function as the CG generation unit 51, the first synthesis unit 52, the image recognition unit 53, the condition judgment unit 54, and the image editing unit 55, and the image pickup device 2 (camera control unit 16) may function as the second synthesis unit 56.

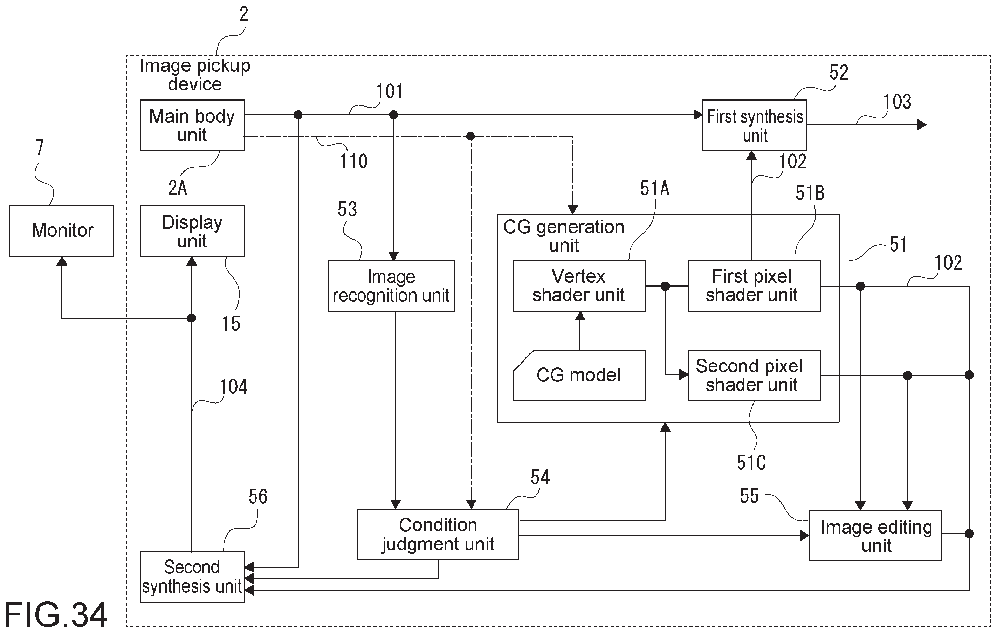

Alternatively, as shown in Fig. 34, the image pickup device 2 (camera control unit 16) may function as the CG generation unit 51, the first synthesis unit 52, the image recognition unit 53, the condition judgment unit 54, the image editing unit 55, and the second synthesis unit 56.

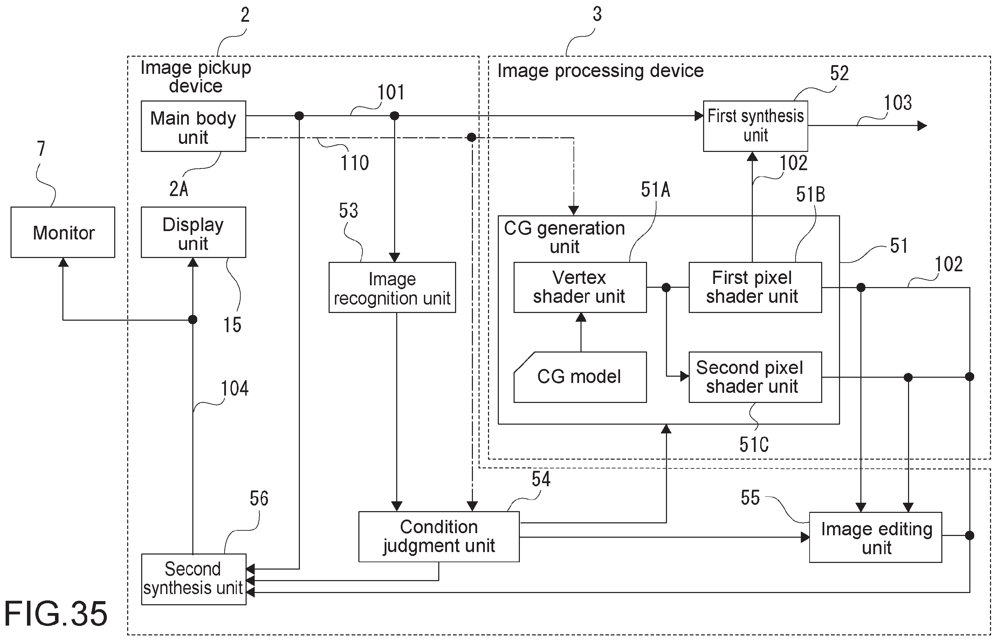

Furthermore, as shown in Fig. 35, the CPU 31 or GPU 34 of the image processing device 3 may function as the CG generation unit 51 and the first synthesis unit 52, and the image pickup device 2 (camera control unit 16) may function as the image recognition unit 53, the condition judgment unit 54, the image editing unit 55, and the second synthesis unit 56.

Furthermore, in the embodiment described above, once the mode is determined, the control condition corresponding to the determined mode is set. However, it is also possible not to provide the modes so that the control condition is set irrespective of the modes.

### <6. Summary of embodiment>

As described above, the image processing method as the embodiment includes controlling display of a virtual object 6 to be synthesized with a captured image 101 captured by an image pickup device 2, based on a predetermined control condition.

This makes it possible to control the display and non-display of the virtual object 6 and/or control the display mode of the virtual object 6, based on the predetermined control condition, for example.

Therefore, it becomes possible to improve convenience of the monitor synthesis image 104 for the user (cameraman 4) during image pickup.

Whether or not to display the virtual object 6 is controlled in accordance with the control condition.

As a result, it is possible to change the display and non-display of the virtual object 6 in accordance with whether or not the control condition has been met.

Therefore, for example, when moving the image pickup device 2, it is possible to suppress a situation where the virtual object 6 is displayed on the display unit 15 and the monitor 7 to make it difficult to see the real space.

A display mode of the virtual object 6 is controlled in accordance with the control condition.

As a result, the display mode of the virtual object 6 can be changed between the normal display mode and other display modes in accordance with whether or not the control condition has been met.

Therefore, for example, when it is difficult to see the real space, the display mode of the virtual object 6 can be changed to a display mode that makes it easier to see the real space, without completely displaying the virtual object 6.

The display of the virtual object 6 to be synthesized with the captured image 101 is controlled based on a control condition corresponding to a set mode out of a plurality of modes in which the control condition differs.

As a result, it is possible to control the display of the virtual object 6 in a mode that the cameraman 4 desires, and display a more easy-to-see monitor synthesis image 104.

The plurality of modes include any of a camera position and posture mode in which a control condition that is based on a position and posture of the image pickup device 2 is set, an image pickup control mode in which a control condition that is based on image pickup information (camera information 110) of the image pickup device 2 is set, a virtual object mode in which a control condition that is based on the virtual object 6 is set, or a real object mode in which a control condition that is based on a real object is set.

As a result, the display of the virtual object 6 can be changed automatically (without an operation by the cameraman 4) based on the control condition corresponding to the set mode.

The control condition includes at least one of a change of a position or posture of the image pickup device 2, a distance between the image pickup device 2 and the virtual object 6 falling within a predetermined threshold value, or the image pickup device 2 entering a predetermined range (control switch area 61).

As a result, the display of the virtual object 6 can be changed automatically based on the position and posture of the image pickup device 2. Further, it is possible to reduce lowering of visibility that occurs when the virtual object 6 is displayed in the normal display mode on the display unit 15 and the monitor 7 when the image pickup device 2 is close to the virtual object 6.

When the distance between the image pickup device 2 and the virtual object 6 is within the predetermined threshold value Th, a portion of the virtual object 6 that is within the threshold value Th is hidden, or a display mode thereof is changed.

As a result, it is possible to reduce lowering of visibility that occurs when the virtual object 6 is displayed in the normal display mode on the display unit 15 and the monitor 7 when the image pickup device 2 is close to the virtual object 6.

When the image pickup device 2 is within the predetermined range (control switch area 61), the virtual object 6 is hidden, or a display mode thereof is changed.

As a result, it is possible to prevent the virtual object 6 from being displayed in the normal display mode when the image pickup device 2 enters the control switch area 61.

The control condition includes a change of a focus position in the image pickup device 2.

As a result, it becomes possible for the cameraman 4 to check the focus position when the focus position of the image pickup device 2 is being moved.

When the focus position is being changed in the image pickup device, a portion of the virtual object 6 that corresponds to a depth of field is displayed in a normal display mode, and portions other than the portion are hidden, or a display mode thereof is changed.

As a result, it becomes possible for the cameraman 4 to easily check the portion of the virtual object 6 that is in focus, and also easily check the real space.

When the focus position is being changed in the image pickup device, a portion of the virtual object 6 that is more on a front side than the focus position is displayed in a normal display mode, and portions other than the portion are hidden, or a display mode thereof is changed.

As a result, it becomes possible for the cameraman 4 to easily check the focus position, and also easily check the real space.

When the focus position is being changed in the image pickup device, a portion of the virtual object that is more on a rear side than the focus position is displayed in a normal display mode, and portions other than the portion are hidden, or a display mode thereof is changed.

As a result, it becomes possible for the cameraman 4 to easily check the focus position, and also easily check the real space.

The control condition includes at least one of the virtual object 6 entering a predetermined range (control switch area 62), the virtual object 6 entering an angle of view of the image pickup device 2, or a condition assigned to the virtual object 6 being met.

Thus, since the display of the virtual object 6 can be controlled based on the position and/or the like of the virtual object 6, controllability can be improved.

When the virtual object 6 enters the predetermined range (control switch area 62), a portion of the virtual object 6 that is within the range (control switch area 62) is hidden, or a display mode thereof is changed.

As a result, it becomes possible to hide or change the display of the virtual object 6 when the virtual object 6 enters the predetermined control switch area 62, and thus improve controllability of display control of the virtual object 6.

When the virtual object 6 enters the angle of view of the image pickup device 2, transparency of a portion of the virtual object 6 that has entered the angle of view is changed.

As a result, it becomes possible to check the time that the virtual object 6 has entered the angle of view according to the transparency.

The control condition includes a distance between a real object 5 and the virtual object 6 falling within a predetermined distance.

As a result, it becomes possible to suppress a situation where the real object 5 overlaps with the virtual object 6 to make it difficult to see the real object 5 when the real object 5 and the virtual object 6 come close to each other.

When the distance between the real object 5 and the virtual object 6 is within the predetermined distance, a display mode of the virtual object 6 that is within the predetermined distance is changed.

As a result, it becomes possible to suppress a situation where the real object 5 overlaps with the virtual object 6 to make it difficult to see the real object 5.

When the control condition is met, transparency of the virtual object 6 is changed over time.

As a result, since the display mode of the virtual object 6 changes over time, it becomes possible to easily check the virtual object 6, and also easily check the real space.

Further, an image processing device 3 includes a display control unit (CG generation unit 51, image editing unit 55, second synthesis unit 56) which controls display of a virtual object 6 to be synthesized with a captured image 101 captured by an image pickup device 2, based on a predetermined control condition.

Further, an image processing system 1 includes an image pickup device 2 and an image processing device 3, and in that the image pickup device 2 includes an image pickup unit 12 which obtains a captured image 101 by capturing a real space, and the image processing device 3 includes a display control unit (CG generation unit 51, image editing unit 55, second synthesis unit 56) which controls display of a virtual object 6 to be synthesized with the captured image 101 captured by the image pickup device 2, based on a control condition.

Also by such an image processing device and image processing system, operations and effects similar to those of the image processing method described above as the embodiment can be obtained.

It is noted that the effects described in the present specification are mere examples and are not limited, and other effects may also be exerted.

### <8. Present technology>

The present technology can also take the following configurations.
(1) An image processing method, including:
   controlling display of a virtual object to be synthesized with a captured image captured by an image pickup device, on the basis of a control condition.
(2) The image processing method according to (1), in which
   whether or not to display the virtual object is controlled in accordance with the control condition.
(3) The image processing method according to (1), in which
   a display mode of the virtual object is controlled in accordance with the control condition.
(4) The image processing method according to (1) or (2), in which
   the display of the virtual object to be synthesized with the captured image is controlled on the basis of a control condition corresponding to a set mode out of a plurality of modes in which the control condition differs.
(5) The image processing method according to any one of (1) to (3), in which
   the plurality of modes include any of a camera position and posture mode in which a control condition that is based on a position and posture of the image pickup device is set, an image pickup control mode in which a control condition that is based on image pickup information of the image pickup device is set, a virtual object mode in which a control condition that is based on the virtual object is set, or a real object mode in which a control condition that is based on a real object is set.
(6) The image processing method according to (5), in which the control condition includes at least one of a change of a position or posture of the image pickup device, a distance between the image pickup device and the virtual object falling within a predetermined threshold value, or the image pickup device entering a predetermined range.
(7) The image processing method according to (6), in which when the distance between the image pickup device and the virtual object is within the predetermined threshold value, a portion of the virtual object that is within the threshold value is hidden, or a display mode thereof is changed.
(8) The image processing method according to (6) or (7), in which when the image pickup device is within the predetermined range, the virtual object is hidden, or a display mode thereof is changed.
(9) The image processing method according to any one of (6) to (8), in which
   the control condition includes a change of a focus position in the image pickup device.
(10) The image processing method according to (9), in which
   when the focus position is being changed in the image pickup device, a portion of the virtual object that corresponds to a depth of field is displayed in a normal display mode, and portions other than the portion are hidden, or a display mode thereof is changed.
(11) The image processing method according to (9) or (10), in which
   when the focus position is being changed in the image pickup device, a portion of the virtual object that is more on a front side than the focus position is displayed in a normal display mode, and portions other than the portion are hidden, or a display mode thereof is changed.
(12) The image processing method according to any one of (9) to (11), in which
   when the focus position is being changed in the image pickup device, a portion of the virtual object that is more on a rear side than the focus position is displayed in a normal display mode, and portions other than the portion are hidden, or a display mode thereof is changed.
(13) The image processing method according to any one of (6) to (12), in which
   the control condition includes at least one of the virtual object entering a predetermined range, the virtual object entering an angle of view of the image pickup device, or a condition assigned to the virtual object being met.
(14) The image processing method according to (13), in which
   when the virtual object enters the predetermined range, a portion of the virtual object that is within the range is hidden, or a display mode thereof is changed.
(15) The image processing method according to (13) or (14), in which
   when the virtual object enters the angle of view of the image pickup device, transparency of a portion of the virtual object that has entered the angle of view is changed.
(16) The image processing method according to any one of (6) to (15), in which
   the control condition includes a distance between a real object and the virtual object falling within a predetermined distance.
(17) The image processing method according to (16), in which
   when the distance between the real object and the virtual object is within the predetermined distance, a display mode of the virtual object within the predetermined distance is changed.
(18) The image processing method according to any one of (1) to (17), in which
   when the control condition is met, transparency of the virtual object is changed over time.
(19) An image processing device, including:
   a display control unit which controls display of a virtual object to be synthesized with a captured image captured by an image pickup device, on the basis of a control condition.
(20) An image processing system, including:
   an image pickup device; and
   an image processing device, in which
   the image pickup device includes an image pickup unit which obtains a captured image by capturing a real space, and
   the image processing device includes a display control unit which controls display of a virtual object to be synthesized with the captured image captured by the image pickup device, on the basis of a control condition.

### Reference Signs List

- 1: image processing system
- 2: image pickup device
- 3: image processing device
- 7: monitor
- 15: display unit
- 51: CG generation unit
- 54: condition judgment unit
- 55: image editing unit
- 56: second synthesis unit

## Claims

1. An image processing method, comprising:
controlling display of a virtual object to be synthesized with a captured image captured by an image pickup device, on a basis of a control condition.

2. The image processing method according to claim 1, wherein
whether or not to display the virtual object is controlled in accordance with the control condition.

3. The image processing method according to claim 1, wherein
a display mode of the virtual object is controlled in accordance with the control condition.

4. The image processing method according to claim 1, wherein
the display of the virtual object to be synthesized with the captured image is controlled on the basis of a control condition corresponding to a set mode out of a plurality of modes in which the control condition differs.

5. The image processing method according to claim 4, wherein
the plurality of modes include any of a camera position and posture mode in which a control condition that is based on a position and posture of the image pickup device is set, an image pickup control mode in which a control condition that is based on image pickup information of the image pickup device is set, a virtual object mode in which a control condition that is based on the virtual object is set, or a real object mode in which a control condition that is based on a real object is set.

6. The image processing method according to claim 1, wherein
the control condition includes at least one of a change of a position or posture of the image pickup device, a distance between the image pickup device and the virtual object falling within a predetermined threshold value, or the image pickup device entering a predetermined range.

7. The image processing method according to claim 6, wherein
when the distance between the image pickup device and the virtual object is within the predetermined threshold value, a portion of the virtual object that is within the threshold value is hidden, or a display mode thereof is changed.

8. The image processing method according to claim 6, wherein
when the image pickup device is within the predetermined range, the virtual object is hidden, or a display mode thereof is changed.

9. The image processing method according to claim 1, wherein
the control condition includes a change of a focus position in the image pickup device.

10. The image processing method according to claim 9, wherein
when the focus position is being changed in the image pickup device, a portion of the virtual object that corresponds to a depth of field is displayed in a normal display mode, and portions other than the portion are hidden, or a display mode thereof is changed.

11. The image processing method according to claim 9, wherein
when the focus position is being changed in the image pickup device, a portion of the virtual object that is more on a front side than the focus position is displayed in a normal display mode, and portions other than the portion are hidden, or a display mode thereof is changed.

12. The image processing method according to claim 9, wherein
when the focus position is being changed in the image pickup device, a portion of the virtual object that is more on a rear side than the focus position is displayed in a normal display mode, and portions other than the portion are hidden, or a display mode thereof is changed.

13. The image processing method according to claim 1, wherein
the control condition includes at least one of the virtual object entering a predetermined range, the virtual object entering an angle of view of the image pickup device, or a condition assigned to the virtual object being met.

14. The image processing method according to claim 13, wherein
when the virtual object enters the predetermined range, a portion of the virtual object that is within the range is hidden, or a display mode thereof is changed.

15. The image processing method according to claim 13, wherein
when the virtual object enters the angle of view of the image pickup device, transparency of a portion of the virtual object that has entered the angle of view is changed.

16. The image processing method according to claim 1, wherein
the control condition includes a distance between a real object and the virtual object falling within a predetermined distance.

17. The image processing method according to claim 16, wherein
when the distance between the real object and the virtual object is within the predetermined distance, a display mode of the virtual object within the predetermined distance is changed.

18. The image processing method according to claim 1, wherein
when the control condition is met, transparency of the virtual object is changed over time.

19. An image processing device, comprising:
a display control unit which controls display of a virtual object to be synthesized with a captured image captured by an image pickup device, on a basis of a control condition.

20. An image processing system, comprising:
an image pickup device; and
an image processing device, wherein
the image pickup device includes an image pickup unit which obtains a captured image by capturing a real space, and
the image processing device includes a display control unit which controls display of a virtual object to be synthesized with the captured image captured by the image pickup device, on a basis of a control condition.
